# EUROPÄISCHE PATENTSCHRIFT

(11) **EP 0 781 290 B1**
(45) Veröffentlichungstag und Bekanntmachung des Hinweises auf die Patenterteilung: **21.05.2008**
(21) Anmeldenummer: 96922747.9
(22) Anmeldetag: 05.07.1996
(51) Int. Cl.: C07F 7/18, C08G 77/58, C08G 79/00, C08G 77/20

(54) **HYDROLYSIERBARE UND POLYMERISIERBARE BZW. POLYADDIERBARE SILANE**
HYDROLYZABLE AND POLYMERIZABLE OR ADDITION-POLYMERIZABLE SILANES
SILANES POUVANT SUBIR UNE HYDROLYSE ET UNE POLYMERISATION OU UNE POLYADDITION

(30) Priorität: 06.07.1995 DE 19524657
(43) Veröffentlichungstag der Anmeldung: 02.07.1997
(73) Patentinhaber: Fraunhofer-Gesellschaft zur Förderung der angewandten Forschung e.V., 80686 München (DE)
(72) Erfinder: WOLTER, Herbert, D-97950 Grossrinderfeld (DE); STORCH, Werner, D-97204 Höchberg (DE)
(74) Vertreter: Olgemöller, Luitgard Maria
(86) Internationale Anmeldenummer: PCT/DE1996/001216
(87) Internationale Veröffentlichungsnummer: WO 1997/002272

(56) Entgegenhaltungen:
- EP-A- 0 388 028
- EP-A- 0 439 650
- DE-A- 4 416 857
- US-A- 3 803 196
- US-A- 3 922 436

## Beschreibung

Die Erfindung betrifft hydrolysierbare und polymerisierbare bzw. polyaddierbare Silane, Verfahren zu deren Herstellung sowie deren Verwendung zur Herstellung von organisch modifizierten Kieselsäurepolykondensaten bzw. -heteropolykondensaten sowie deren Verwendung zur Herstellung von makromolekularen Massen durch Polymerisaten bzw. Polyaddition.

Hydrolysierbare, organisch modifizierte Silane finden eine breite Anwendung bei der Herstellung kratzfester Beschichtungen für die unterschiedlichsten Substrate, für die Herstellung von Füllstoffen, von Klebe- und Dichtungsmassen oder von Formkörpern. Dabei werden diese Silane entweder alleine, in Mischungen oder in Gegenwart weiterer hydrolysierbarer und/oder kondensierbarer Komponenten hydrolytisch kondensiert, wobei die endgültige Härtung thermisch, photochemisch oder redoxinduziert erfolgt.

So sind z.B. aus der DE 3407087 C2 kratzfeste Beschichtungen bekannt, die durch hydrolytische Kondensation einer Mischung entstehen, die u.a. aus einer hydrolysierbaren Titan- oder Zirkoniumverbindung und aus einem hydrolysierbaren, organofunktionellen Silan R'ₘ(R"Y)ₙSiX₍₄₋ₘ₋ₙ₎ besteht, wobei R' z.B. Alkyl oder Alkenyl ist, R" z.B. Alkylen oder Alkenylen und X einen hydrolysierbaren Rest darstellt.

Aus der DE 3536716 A1 sind z.B. Klebe- und Dichtungsmassen bekannt, die erhalten worden sind durch hydrolytische Kondensation von einem oder mehreren Organosilanen der allgemeinen Formel RₘSiX₄₋ₘ und gegebenenfalls von einer oder mehreren der Komponenten SiX₄ und/oder Rₙ(R"Y)ₚSiX_{4-n-p'} wobei R und R" z.B. Alkyl, Alkenyl, Aryl, Alkylaryl, Arylalkyl, Alkenylaryl oder Arylalkenyl, X z.B. Wasserstoff, Halogen, Hydroxy, Alkoxy oder Acyloxy bedeutet, und Y z.B. ein Halogen oder eine gegebenenfalls substituierte Amino-, Amid-, Aldehyd-, Alkylcarbonyl-, Carboxy-, Hydroxy-, Mercapto- oder Cyanogruppe darstellt.

Die DE 44 16 857 A1 beschreibt eine generische Gruppe von Silanverbindungen mit polymerisierbaren Doppelbindungen. Ein Beispiel zeigt ein Norbornenylderivat, das jedoch nicht unter die allgemeine Formel I des vorliegenden Anspruchs 1 fällt, da es eine freie Carbonsäuregruppe an den Rest R⁴ gebunden aufweist. Einige Verbindungen der DE 44 16 857 A1 werden mit Hilfe von Hydrosilylierungen und Thiolsilan-Additionen an doppelbindungshaltige Verbindungen erzeugt.

Ferner sind handelsübliche Silane mit reaktiven Doppelbindungen bekannt, wie z.B. (Meth)Acryloxysilane des folgenden Typs, 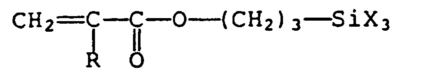 wobei R Wasserstoff oder Methyl bedeutet und X z.B. Halogen oder Alkoxy ist. Diese Silane sind hydrolysier- und polymerisierbar und können für die Herstellung der oben genannten Systeme eingesetzt werden. Sie bieten den großen Vorteil, daß die resultierende Beschichtung, die resultierende Füll-, Klebe- oder Dichtungsmasse oder der resultierende Formkörper durch Polymerisation an den reaktiven Doppelbindungen thermisch, photochemisch oder redoxinduziert gehärtet werden kann.

Handelsübliche Silane mit reaktiven Doppelbindungen, wie z.B. die oben genannten (Meth)Acryloxysilane, stellen im allgemeinen monofunktionelle Verbindungen mit einer C=C-Doppelbindung dar und sind in der Regel niedermolekulare und somit vor der Si-X-Hydrolyse und Kondensation relativ flüchtige Verbindungen, die aufgrund der vorhandenen Acrylgruppe toxikologisch bedenklich sind. Bei der Weiterverarbeitung durch Polymerisation oder modifizierte Funktionalisierung haben diese Silane außerdem den Nachteil, daß aufgrund der Anwesenheit nur einer reaktiven C=C-Doppelbindung lediglich Kettenpolymere erhältlich sind und bei vorheriger Funktionalisierung diese für die organische Polymerisation notwendige C=C-Doppelbindung meist verloren geht. Ferner befindet sich zwischen der Doppelbindung und dem zur Bildung eines anorganischen Netzwerkes befähigten Silicium in der Regel nur eine kurze Kette, so daß die mechanischen Eigenschaften (Flexibilität etc.) über die organischen Gruppen nur in engen Grenzen variierbar sind.

Aus der EP 0 388 028 A2, der EP 0 439 650 A1 und der US 3,922,436 sind zwar hydrolysierbare und polymerisierbare Silane bekannt, die über eine Norbornen-Gruppe im Molekül verfügen. Diese werden über Diels-Alder-Reaktionen (EP 0 388 028 A2 und US 3,922,436), Hydrosilylierung (EP 0 439 650 A1) bzw. aus norbomenhaltigen Säureanhydriden mit Epoxygruppen, Thiolgruppen oder Aminogruppen enthaltenden Silanen (US 3,922,436) hergestellt, was ihre strukturellen Eigenschaften determiniert und limitiert. Deshalb besteht immer noch Bedarf an einer Verbesserung, auch im Hinblick auf eine Funktionalisierung des Moleküls.

Aufgabe der vorliegenden Erfindung ist es deshalb, neue, organisch modifizierte Silane bereit zu stellen, die hydrolysier- und polymerisierbar bzw. polyaddierbar sind, die alleine, in Mischungen oder zusammen mit anderen hydrolysierbaren, kondensierbaren, polyaddierbaren oder polymerisierbaren Komponenten zu kratzfesten Beschichtungen, zu Füll-, Klebe- oder Dichtungsmassen, zu Formkörpern, zu Folien oder Fasern, zu Füllstoffen oder zu Einbettmaterialien verarbeitet werden können. Diese Silane sollen universell einsetzbar sein, und sie sollen in ein anorganisch-organisches Verbundsystem, d.h. in ein anorganisch-organisches Netzwerk eingebaut werden können. Ferner sollen diese Silane schnell und einfoch, d.h. ohne aufwendigen Syntheseprozeß herzustellen sein. Desweiteren soll der Abstand zwischen Silicium und reaktiver Doppelbindung beliebig einstellbar sein. Außerdem sollen die Silane eine variable Anzahl von C=C-Doppelbindungen aufweisen und es sollen zusätzliche Funktionalitäten in das Molekül einfügbar sein.

Gelöst wird diese Aufgabe durch hydrolysierbare und polymerisierbare bzw. polyaddierbare Silane der allgemeinen Formel 1, 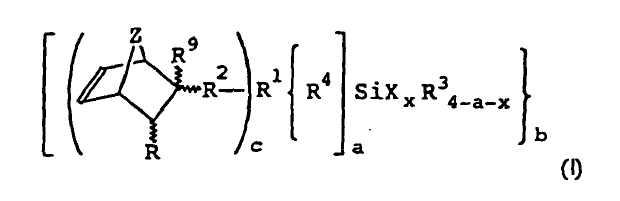 in der die Reste und Indices gleich oder verschieden sind und folgende Bedeutung haben

| | | |
|---|---|---|
| R | = | Wasserstoff, R²-R¹-R⁴-SiXₓR³_{3-xz} Carboxyl-, Alkyl, Alkenyl, Aryl, Alkylaryl oder Arylalkyl mit jeweils 1 bis 15 Kohlenstoffatomen, wobei diese Reste Sauerstoff- oder Schwefelatome, Ester-, Carbonyl-, Amid- oder Aminogruppen enthalten können; |
| R¹ | = | Alkylen, Arylen, Arylenalkylen oder Arylenalkylen mit jeweils 0 bis 15 Kohlensioffatomen, wobei diese Reste Sauerstoff- oder Schwefelatome, Ester-, Carbonyl-, Amid- oder Aminogruppen enthalten können; |
| R² | = | Alkylen, Arylen, Aryfenalkylen oder Arylenalkylen mit jeweils 0 bis 15 Kohlenstoffatomen, wobei diese Reste Sauerstoff- oder Schwefelatome, Ester-, Carbonyl-, Amid- oder Aminogruppen enthalten können; |
| R³ | = | Alkyl, Alkenyl, Aryl, Alkylaryl oder Arylalkyl mit jeweils 1 bis 15 Kohlenstoffatomen, wobei diese Reste Sauerstoff- oder Schwefelatome, Ester-, Carbonyl-, Amid- oder Aminogruppen enthalten können; |
| R⁴ | = | -CHR⁶-CHR⁶-S-R⁵-, -CO-S-R⁵-, -CHR⁶-CHR⁶-NR⁶-R⁵-, -Y-CS-NH-R⁵-, -S-R⁵,-Y-CO-NH-R⁵-oder -CO-NR⁶-R⁵-; |
| R⁵ | = | Alkylen, Arylen, Arylenolkylen oder Arylenalkylen mit jeweils 1 bis 15 Kohlenstoffotomen, wobei diese Reste Sauerstoff- oder Schwefelatome, Ester-, Carbonyl-, Amid- oder Aminogruppen enthalten können; |
| R⁶ | = | Wasserstoff, Alkyl oder Aryl mit 1 bis 10 Kohlenstoffatomen |
| R⁹ | = | Wasserstoff, Alkyl, Alkenyl, Aryl, Alkylaryl oder Arylalkyl mit jeweils 1 bis 15 Kohlenstoffatomen, wobei diese Reste Sauerstoff- oder Schwefelatome, Ester-, Carbonyl-, Amid- oder Aminogruppen enthalten können; |
| X | = | Wasserstoff, Halogen, Hydroxy, Alkoxy, Acyloxy, Alkylcarbonyl, Alkoxycarbonyl oder NR"₂. mit R" = Wasserstoff, Alkyl oder Aryl; |
| Y | = | -O-, oder -NR⁶-; |
| Z | = | -O- oder -(CHR⁶)ₘ-, mit m = 1 oder 2; |
| a | = | 1, 2 oder 3, mit b = 1 für a = 2 oder 3; |
| b | = | 1, 2 oder 3, mit a = 1 für b = 2 oder 3; |
| c | = | 1 bis 6; |
| x | = | 1, 2 oder 3; |
| a+x | = | 2, 3 oder 4, |

mit der Maßgabe, daß die Verbindungen der Formel 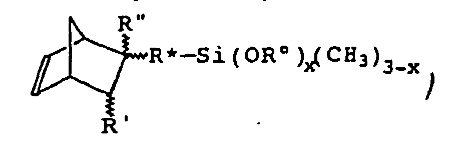 worin

| | | |
|---|---|---|
| R' | = | Wasserstoff, Methyl oder Ethyl ist, |
| R" | = | Wasserstoff, Methyl oder Ethyl ist |
| R* | = | organischer Rest mit 1 bis 6 Kohlenstoff-Atomen ist, |
| R° | = | Alkyl oder Acyl mit 1 bis 6 Kohlenstoff-Atomen; ist, und |
| x | = | 1, 2 oder 3 ist, |

vom Schutzbereich ausgenommen sind, weil sie bereits zum Stand der Technik gehören.

Die Silane der Formel I sind über die C=C-Doppeibindungen der Norbornen-, Oxablcyclohepten- bzw. Bicyclooctenreste polyaddierbar, z.B. an Thiole, und ringöffnend polymerisierbar, und sie sind und über die Reste X hydrolysierbar. Über die hydrolysierbaren Gruppen kann ein anorganisches Netzwerk mit Si-O-Si-Einheiten aufgebaut werden, während die in den bicyclischen Resten enthaltenen C=C-Doppelbindung unter Aufbau eines organischen Netzwerkes einer Polymerisation bzw. einer Polyaddition unterzogen werden können.

Die Alkylreste der allgemeinen Formel I sind z.B. geradkettige, verzweigte, cyclische oder bicyclische Reste mit 1 bis 20, insbesondere mit 1 bis 10 Kohlenstoff-atomen und vorzugsweise niedere Alkylreste mit 1 bis 6, besonders bevorzugt mit 1 bis 4 Kohlenstoffatomen. Spezielle Beispiele sind Methyl, Ethyl, n-Propyl, 1-Propyl, n-Butyl, 1-Butyl, s-Butyl, t-Butyl, n-Pentyl, n-Hexyl, Cyclohexyl, 2-Ethylhexyl, Dodecyl und Octadecyl.

Die Alkenylreste der allgemeinen Formel I sind z.B. geradkettige, verzweigte, cyclische oder bicyclische Reste mit 2 bis 20, bevorzugt mit 2 bis 10 Kohlenstoffatomen und vorzugsweise niedere Alkenylreste mit 2 bis 6 Kohlenstoffatomen, wie z.B. Vinyl, Allyl und 2-Butenyl.

Bevorzugte Arylreste der allgemeinen Formel I sind Phenyl, Biphenyl und Naphthyl. Die Alkoxy-, Acyloxy-, Alkylamino-, Dialkylomino-, Alkylcarbonyl-, Atkoxycarbonyl-, Arylalkyl-, Alkylaryl-, Alkylen- und Alkylenorylenreste leiten sich vorzugsweise von den oben genannten Alkyl- und Arylresten ab. Spezielle Beispiele sind Methoxy, Ethoxy, n- und 1-Propoxy, n-, 1-, s- und t-Butoxy, Monomethylamino, Monoethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Monoalkylomino, Dialkylomino, Trialkylommonium, Amido, Hydroxy, Formyl, Carboxy, Mercapto, Cyano, Isocyanato, Nitro, Epoxy, SO₃H oder PO₄H₂.

Unter den Halogenen sind Fluor, Chlor und Brom und Insbesondere Chlor bevorzugt.

Für a, b, c oder x ≥ 2 können die Reste X und R jeweils die selbe oder eine unterschledliche Bedeutung haben.

Bevorzugte Ausführungsformen der erfindungsgemäßen Silane haben die allgemeine Formeln II, III, IV, V, VI, oder VII, d.h. die Indices a und/oder b und/oder c der allgemeinen Formel I haben den Wert 1. Die übrigen Reste und Indices sind wie im Fall der Formel I definiert.

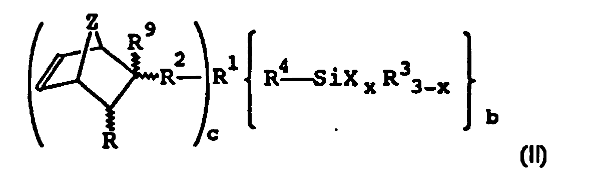

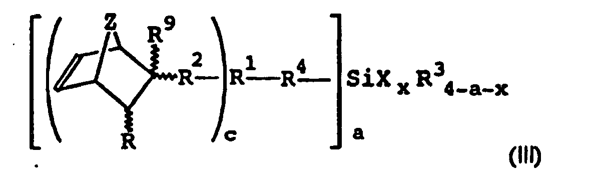

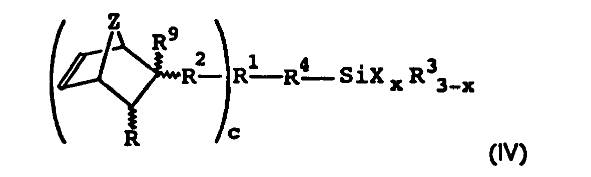

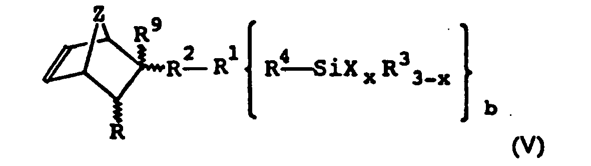

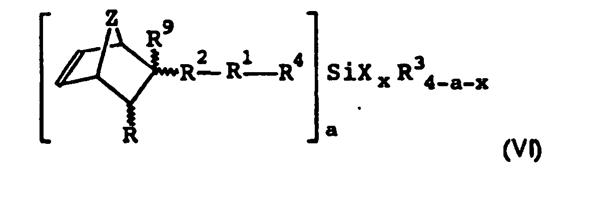

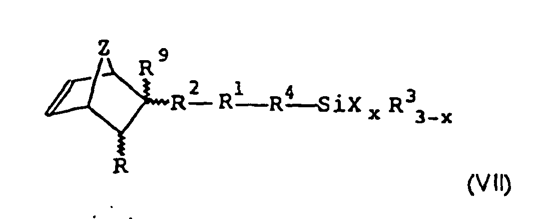

Ohne Einschränkung der Allgemeinheit sind im folgenden konkrete Beispiele für Reste mit dem Index a aufgezeigt, wobei diese Reste innerhalb eines Moleküls mehrmals vorhanden sein können.

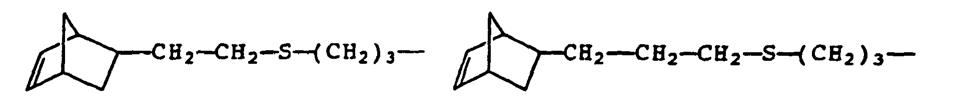

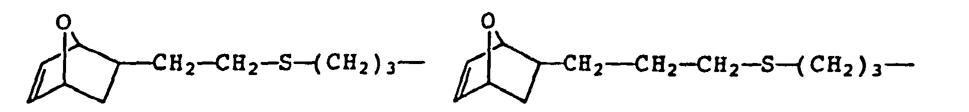

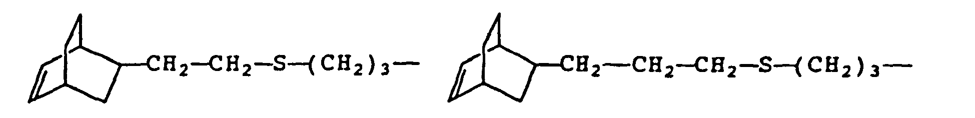

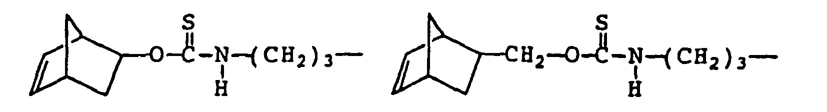

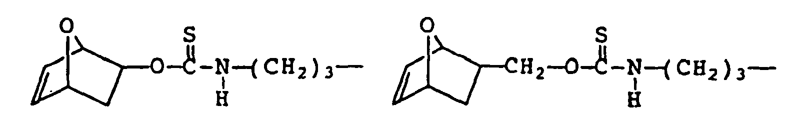

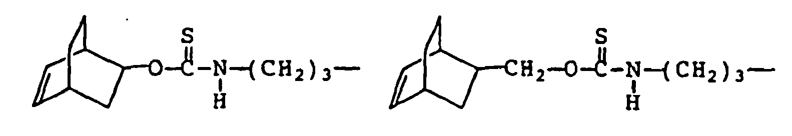

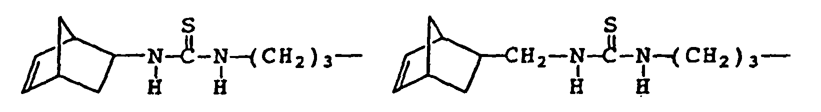

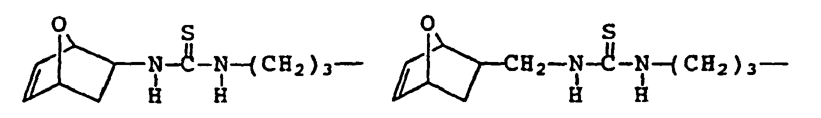

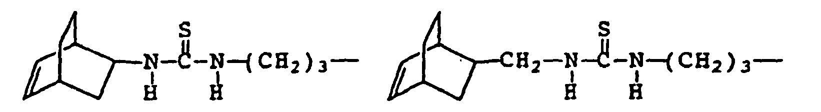

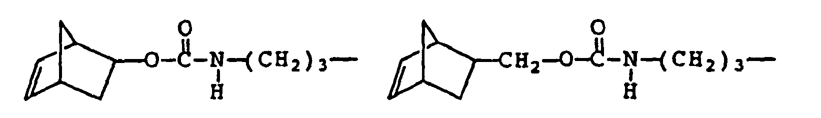

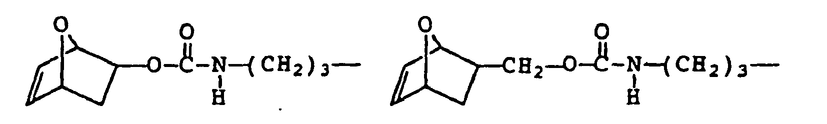

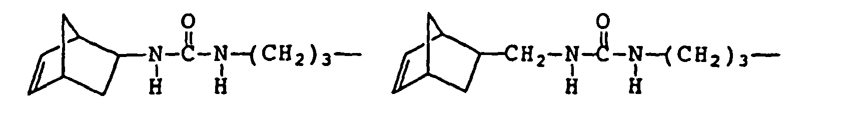

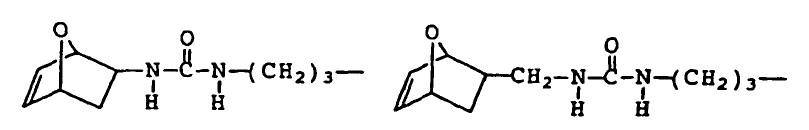

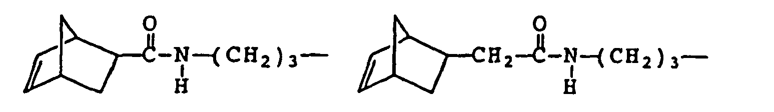

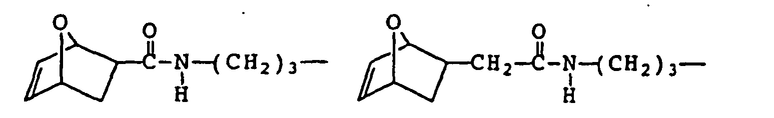

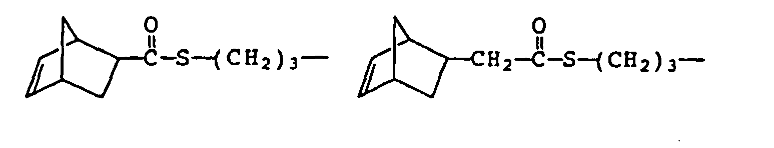

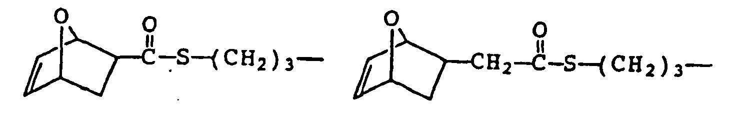

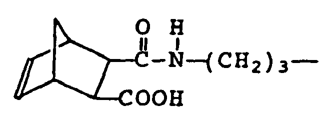

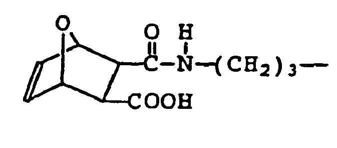

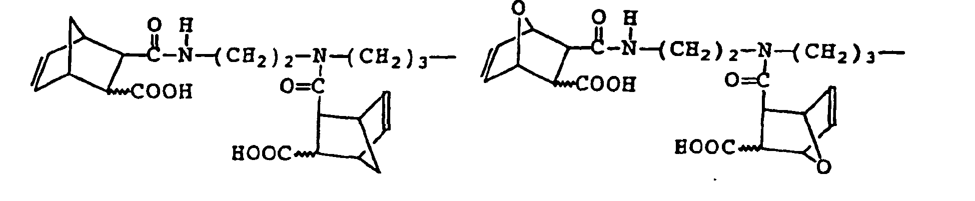

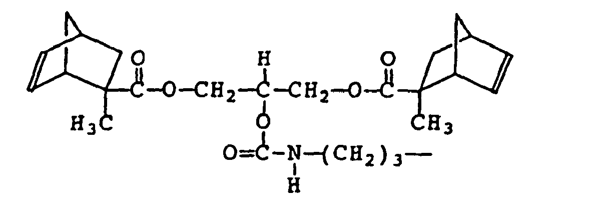

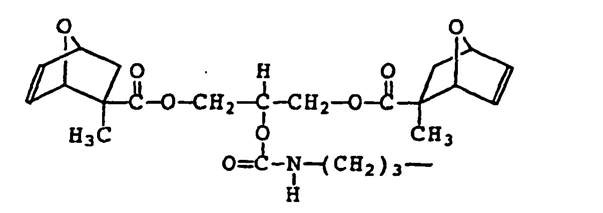

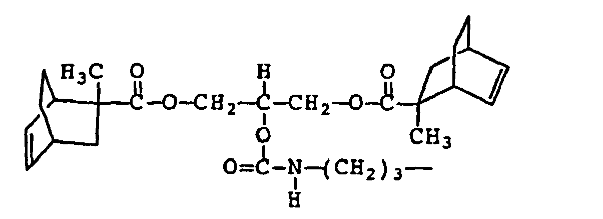

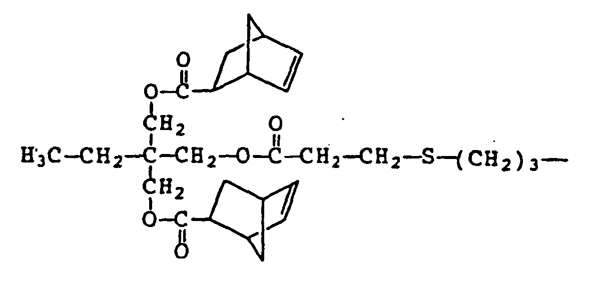

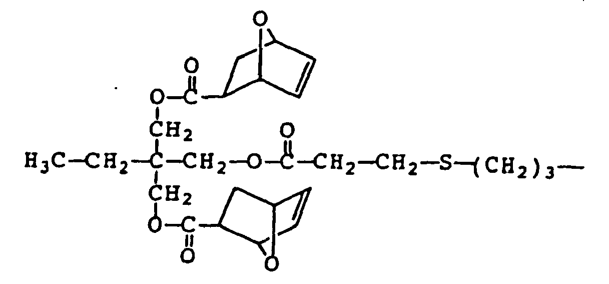

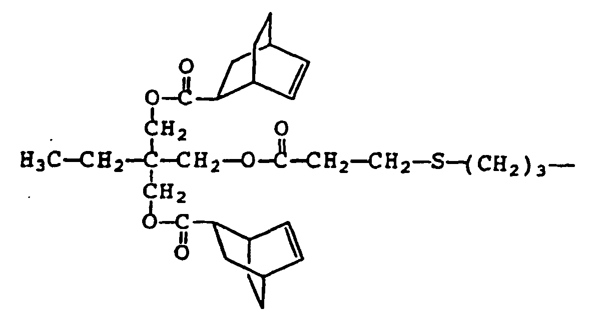

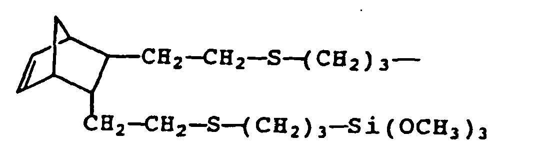

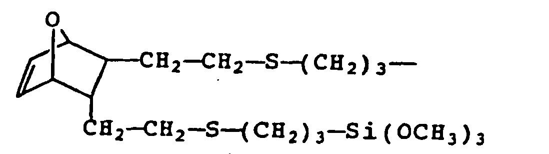

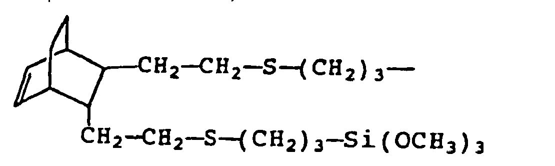

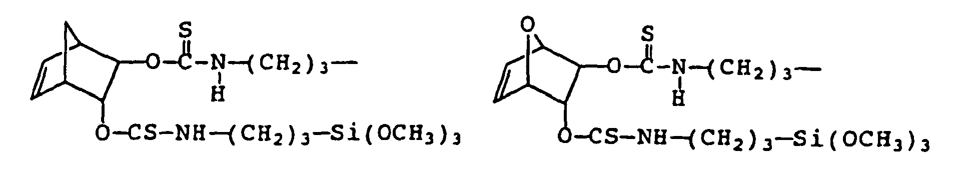

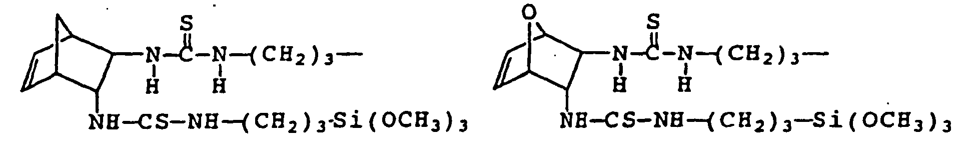

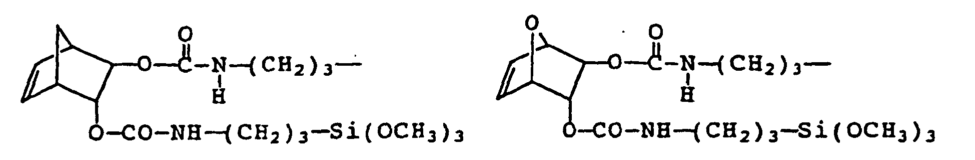

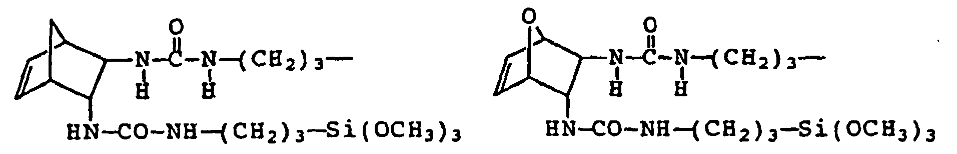

Die Herstellung der erfindungsgemäßen Silane ist über eine große Anzahl von Additions- und Kondensationsreaktionen möglich, die nach den für diese Reaktionstypen üblichen Methoden durchgeführt werden.

In einer ersten Variante z.B. werden Norbornene, Oxabicycloheptene und Bicyclooctene, die endständige, olefinische C=C-Doppelbindungen aufweisen, einer einer Thiol- oder einer Amin-Addition unterzogen. Die allgemeinen Reaktionsschemata sehen wie folgt aus, wobei die Reste und Indices wie im Falle der allgemeinen Formel 1 definiert sind. Aus Gründen der Übersichtlichkeit wurde in den allgemeinen Reaktionsschemata der Rest R⁹ gleich Wasserstoff gesetzt. Diese Reaktionsschemata behalten jedoch für alle, bei der Erläuterung der allgemeinen Formel I genannten Bedeutungen des Restes R⁹ ihre Gültigkeit. Zur Verdeutlichung sind einfache, konkrete Beispiele beigefügt.

### Thiol-Addition :

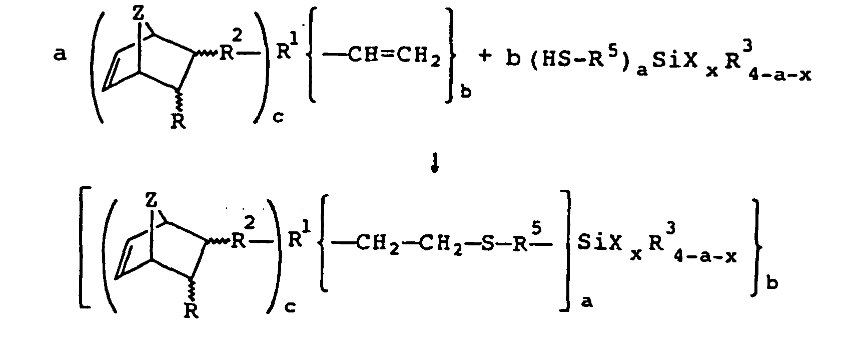

### Konkretes Beispiel :

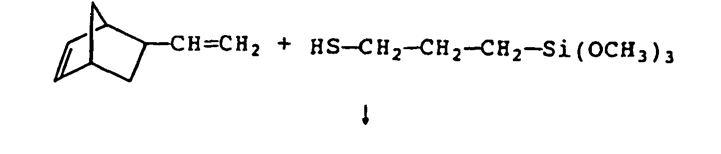

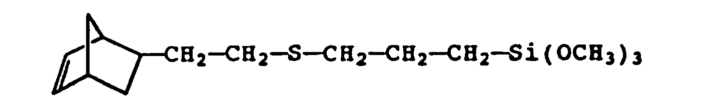

### Amin-Addition :

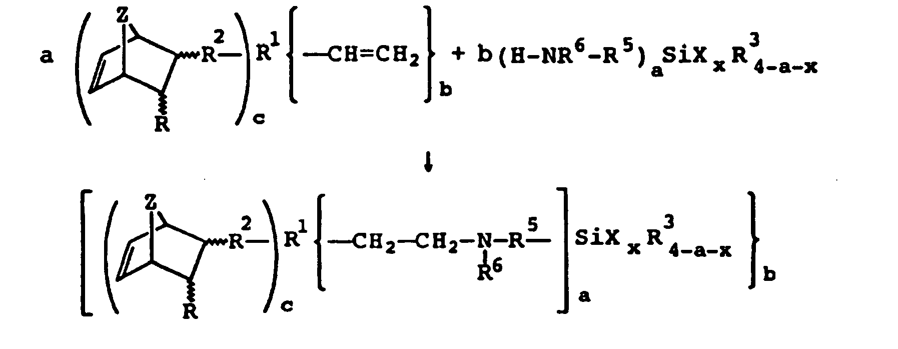

### Konkretes Beispiel.

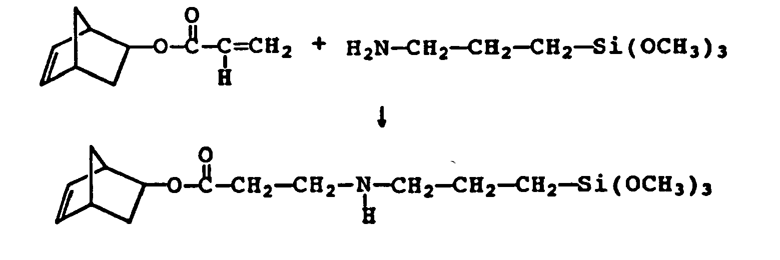

Die Reste R¹ können bis zu b endständige C=C-Doppelbindungen enthalten, so daß jeweils bis zu b Silaneinheiten an den Rest R¹ addierbar sind. Die eingesetzten Silane können bis zu a Wasserstoffotome, Thiol- oder Aminogruppen enthalten, so daß jewells an ein Silan bis zu a bicyclische Reste addierbar sind. Ferner können die Reste R¹ jeweils bis zu c Norbornen-, Bicycloocten oder Oxabicyclohepteneinheiten enthalten. Ganz analog werden auch Norbornene bzw. Oxabicycloheptene der allgemeinen Formel XV umgesetzt.

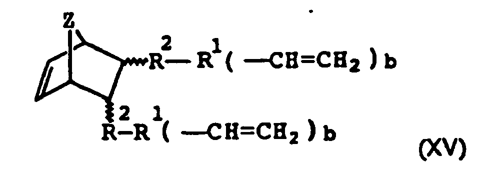

Ferner ist die Hydrosilylierung, die Thiol- oder die Aminaddition auch an den C=C-Doppelbindungen von Norbornenen, Oxa-bicycloheptenen und Bicyclooctenen möglich, falls R¹ über mindestens 2 bicyclische Reste verfügt.

In einer weiteren Verfahrensvariante werden bicyclische Verbindungen, die Hydroxyl- oder Aminogruppen enthalten, an Silane addiert, die Thioisocyanat- oder Isocyanatfunktionen aufweisen. Die allgemeinen Reaktionsschemata sehen wie folgt aus, wobei die Reste und Indices wie im Falle der allgemeinen Formel I definiert sind. Für den Rest R⁹ gilt das eingangs gesagte. Zur Veranschaulichung sind einfache, konkrete Beispiele angefügt.

### Thioisocyanat-Addition :

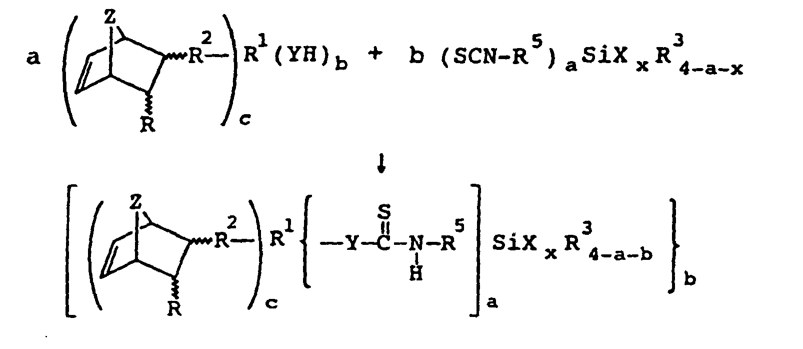

### Konkretes Beispiel .

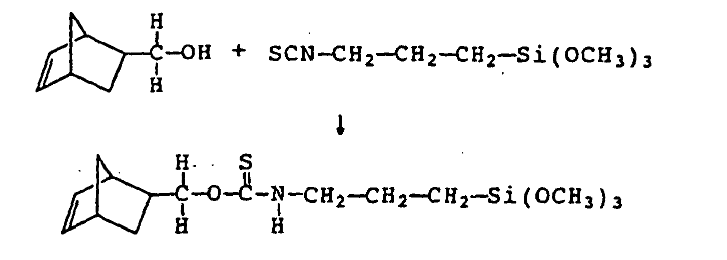

### Isocyanat-Addition :

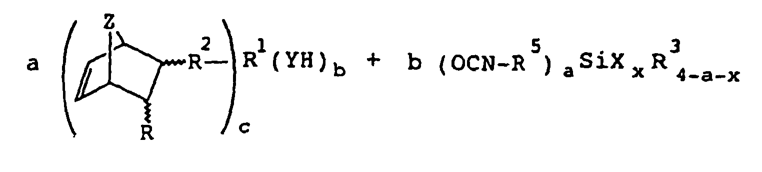

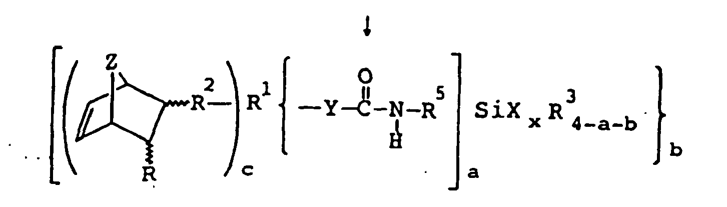

### Konkretes Beispiel :

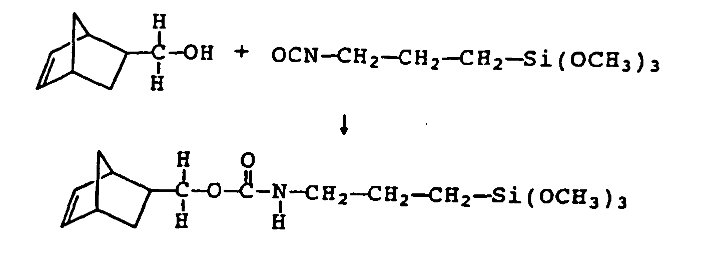

Die Reste R¹ der bicyclischen Komponenten können jeweils bis zu b Hydroxyl- oder Aminogruppen enthalten, so daß jeweils bis zu b Silaneinheiten an den Rest R¹ addierbar sind. Die eingesetzten Silane können jeweils bis zu a Thioisocyanat- oder Isocyanatgruppen aufweisen, so daß an ein Silan bis zu a bicyclische Reste addierbar sind. Ferner kann der Rest R¹ bis zu c Norbornen-, Bicycloocten- oder Oxabicyclohepteneinheiten enthalten. Ganz analog werden auch Norbornene, Bicyclooctene bzw. Oxabicycloheptene der allgemeinen Formen XVI umgesetzt.

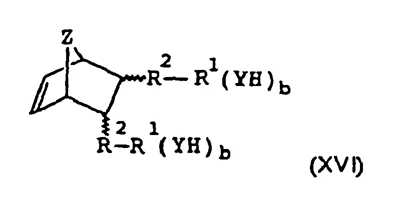

In weiteren Verfahrensvarianten werden bicyclische Carbonsäurederivate mit Amino- oder Thiolgruppen-haltigen Silanen umgesetzt. Die allgemeinen Reaktionsschemata sind im folgenden dargestellt, wobei -A für -OH, -Cl, -H oder - OR steht, die übrigen Reste und Indices wie im Falle der allgemeinen Formel I definiert sind und R⁹ aus Gründen der Übersichtlichkeit Wasserstoff ist. Zur Veranschaulichung sind wiederum einfache, konkrete Beispiele angefügt.

### Umsetzung mit Aminen:

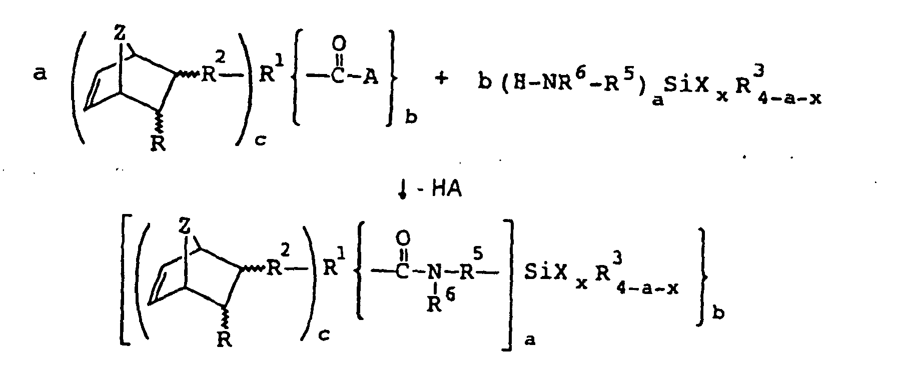

### Konkretes Beispiel.

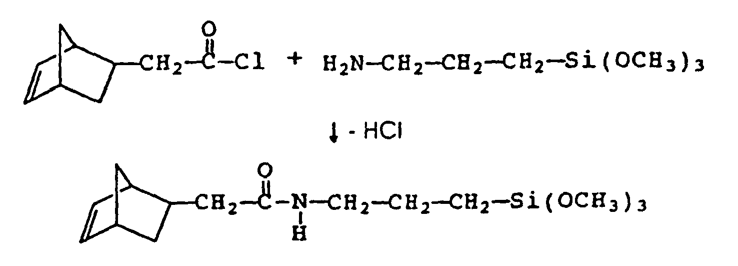

### Umsetzung mit Thiolen :

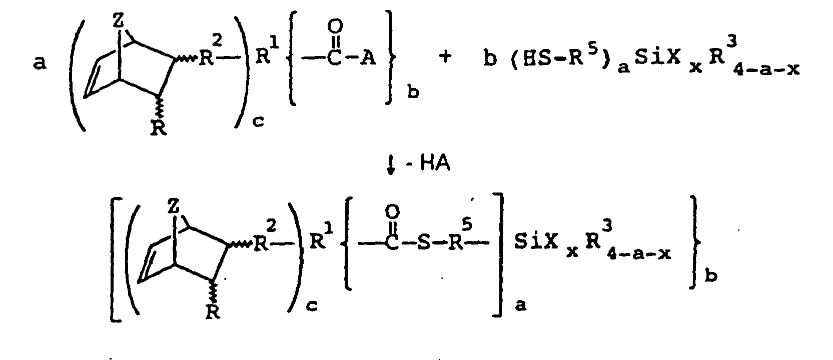

### Konkretes Beispiel :

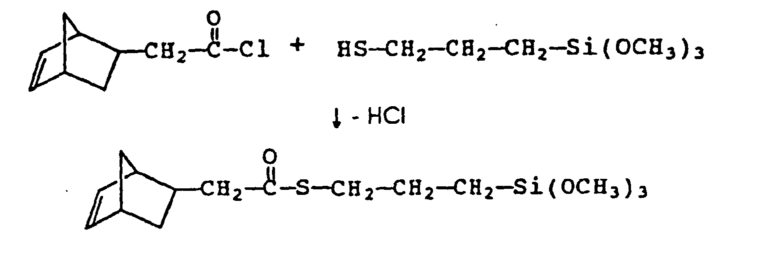

Die Reste R¹ der bicyclischen Komponenten können jeweils bis zu b Carbonsäurederivate enthalten, so daß jeweils bis zu b Silaneinheiten an den Rest R¹ addierbar sind. Die eingesetzten Silane können jeweils bis zu a Amino- oder Mercaptogruppen aufweisen, so daß an ein Silan bis zu a bicyclische Reste addierbar sind. Ferner kann der Rest R¹ bis zu c Norbornen-, Bicycloocten oder Oxabicyclohepteneinheiten enthalten. Ganz analog werden auch Norbornene, Bicyclooctene bzw. Oxabicycloheptene der allgemeinen Formen XVII umgesetzt.

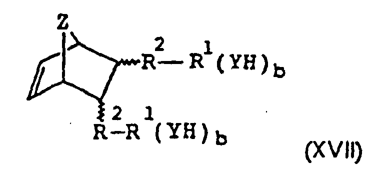

Weitere Synthesemöglichkeiten bestehen in der Addition von Silanen, die Amino-, Metcapto- oder Hydroxylgruppen aufweisen, an Norbornene, Bicyclooctene oder Oxabicycloheptene, die eine Anhydridfunktion enthalten. Das allgemeine Reaktionsschema ist im Folgenden dargestellt. Die Reste und Indices sind wie im Falle der allgemeinen Formel I definiert und R⁹ ist gleich Wasserstoff gesetzt.

Folgende Additionen sind ebenfalls möglich, wobei die Reste und Indices wie in der allgemeinen Formel I definiert sind und der Index a bevorzugt > 1 ist:

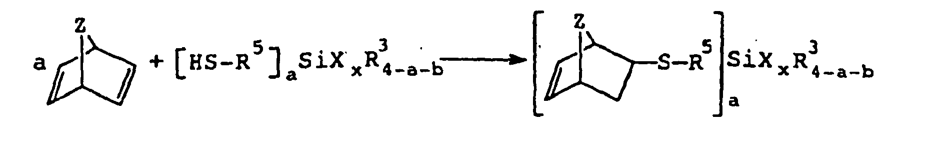

Enthält der Rest R1 mehr als eine endständige C=C-Doppelbindung, so sind mehr als eine Furan-, Cyclopentadien- oder Cyclohexodieneinheit addierbar.

Die eingesetzten Silane sind käuflich erwerbbar oder nach Methoden herstellbar, wie sie z.B. in "Chemie und Technologie der Silicone" (W. Noll, Verlag Chemie GmbH, Weinheim/Berg-straße, 1968) beschrieben sind, in der DE 4011044 C2 oder in der deutschen Patentanmeldung P 4416857.8.

Die eingesetzten Norbornen-, Bicycloocten- oder Oxabicycloheptenderivote sind z.B. durch übliche Funktionalisierung von Norbornadien-, Bicyclooctadien- und Oxabicycloheptadienderivaten erhältlich oder durch Diels-Alder-Addition von Furan-, Cyclopentadien- bzw. Cyclohexadienderivaten an C=C-Doppelbindungen. Ausgangskomponenten der Formel XVIII z.B., in der die Reste und Indices wie im Falle der allgemeinen Formel I definiert sind. 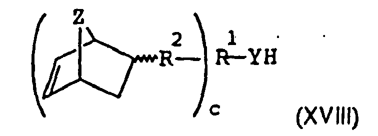 sind z.B. gemäß nachstehender Reaktionsfolge erhältlich.

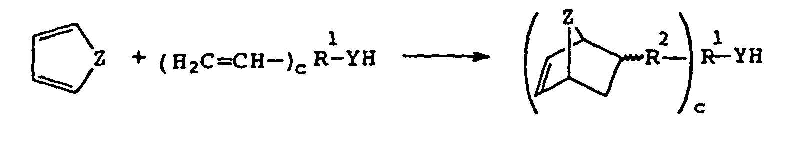

Der große Vorteil der erfindungsgemäßen Herstellungsverfahren besteht darin, daß auf diese Art und Weise organisch modifizierte Silane mit mehreren Norbornen-, Oxobicyclohepten- oder Bicyclohexenresten erhätllich sind. Ohne Einschränkung der Allgemeinheit werden im folgenden konkrete Beispiele zur Herstellung erfindungsgemäßer Silane mit einem oder mehreren Bicyclen aufgezeigt.

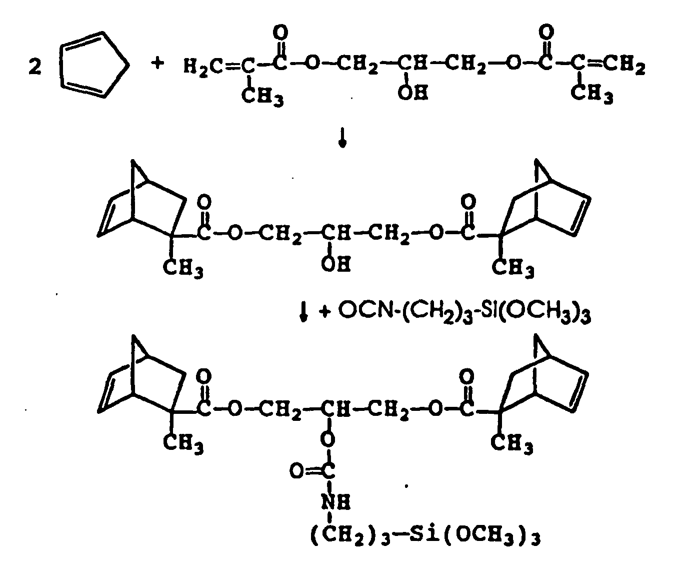

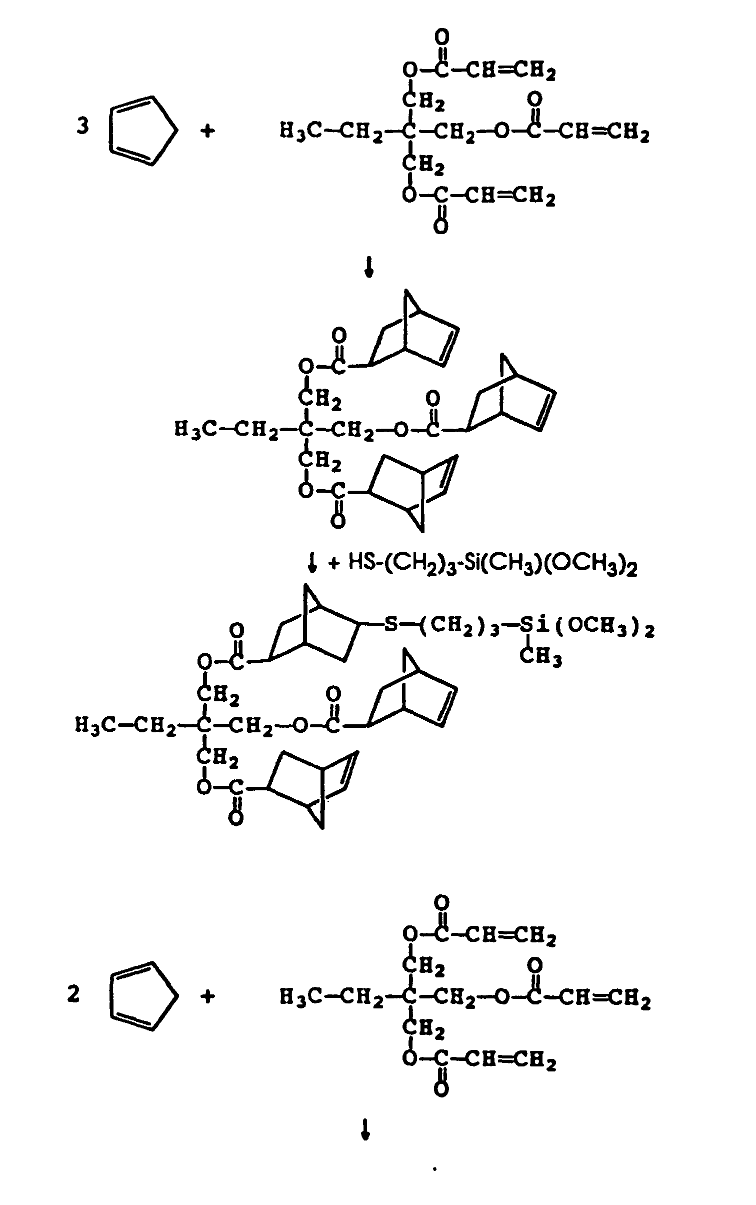

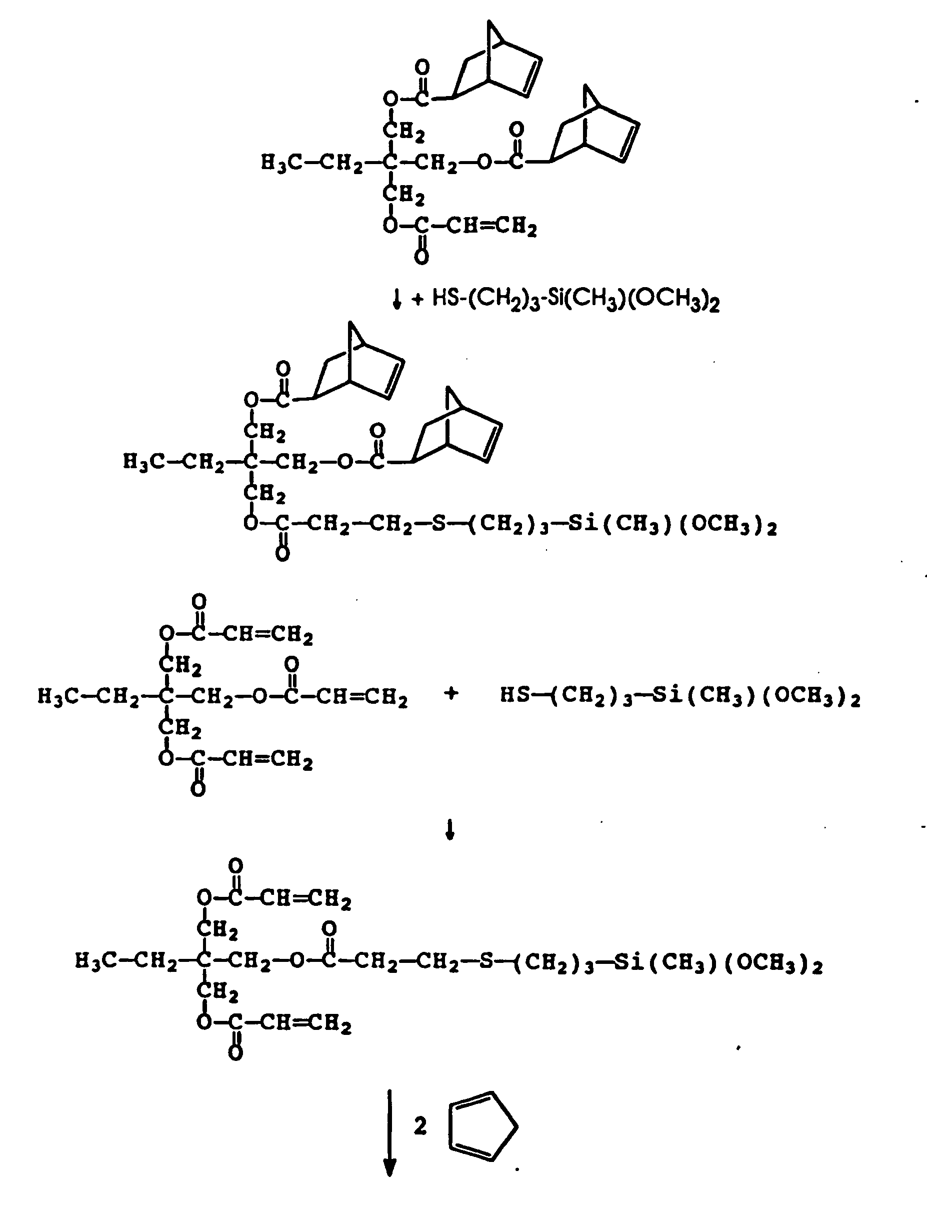

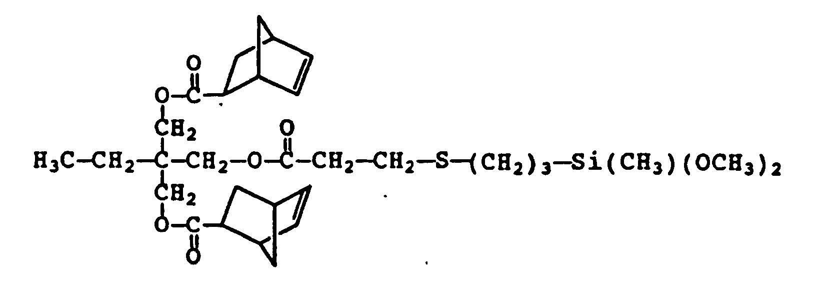

Die erfindungsgemäßen Silane sind stabile Verbindungen, und können entweder alleine oder zusammen mit anderen hydrolysierbaren, kondensierbaren und/oder polymerisierbaren bzw. polyoddierbaren Komponenten zu organisch modifizierten Kleselsdurepolykondensaten oder zu organisch modifizierten kleselsdureheteropolykondensaten verarbeitet werden, deren endgültige Härtung dann durch ringöffnende Polymerisation der C=C-Doppelbindungen der Bicyclen erfolgt oder durch Polyaddition z.B. an Thiole. Die erfindungsgemäßen Silane können aber auch alleine oder zusammen mit anderen hydrolysierbaren, kondensierbaren und/oder polymerisierbaren bzw. polyaddierbaren Komponenten zu Polymerisaten bzw. zu Polyadditionsprodukten verarbeitet werden, die durch anschließende hydrolytische Kondensation verfestigt werden können.

kleseisöure(hetero)polykondensate, die mit organischen Gruppen modifiziert sind, sowie Verfahren zu deren Herstellung (z.B. ausgehend von hydrolytisch kondensierbaren Organosilanen nach dem Sol-Gel-Prozeß) sind In großer Zahl bekannt. Derartige Kondensate finden, wie eingangs schon erwähnt, für die verschiedensten Zwecke Verwendung, z.B. als Formmassen, als Lacke für Überzüge, etc. Aufgrund der vielfältigen Anwendungsmöglichkeiten dieser Substanzklasse besteht aber auch ein ständiges Bedürfnis nach Modifizierung der bereits bekannten Kondensate, zum einen um dadurch neue Anwendungsgebiet zu erschließen und zum anderen, um deren Eigenschaften für bestimmte Verwendungszwecke noch weiter zu optimieren.

Die erfindungsgemäßen Silane sind im basischen oder sauren Milieu hydrolysier- und kondensierbar, ohne daß dadurch eine Verknüpfung der C=C-Doppelbindungen erfolgt. Dadurch ist es möglich, die erfindungsgemäßen Silane durch hydrolytische Kondensation In ein anorganisch-organisches Netzwerk einzubauen. Die erfindungsgemäßen Silane enthalten hydrolysierbare Gruppen X, z.B. Alkoxy- Gruppen, so daß damit ein anorganisches Netzwerk (SI-O-SI-Einheiten) aufgebaut werden kann, während die im Bicyclus enthaltene C=C-Doppelbindung unter Aufbau eines organischen Netzwerkes ringöffnend polymerisiert oder einer Polyaddition unterzogen werden kann. Dadurch ist es möglich, organisch modifizierte, hydrolysier- und kondensierbare Silane in Beschichtungs-, Füll-, Klebe-, Verguß- und Dichtungsmassen, In Formkörpern, Bulkmaterialien, Kompositen, Haftvermittlern, Binde- und Schleifmitteln, Fasern, Folien, Einbettmassen und (Contact)Linsen nach dem Stand der Technik durch die erfindungsgemäßen Silane zu ersetzen.

Zum Aufbau des anorganischen Netzwerkes werden die erfindungsgemäßen Silane oder das Polymerisat bzw. das Polyadditionsprodukt der erfindungsgemäßen Silane, gegebenenfalls unter Zusatz anderer cokondensierbarer Komponenten hydrolysiert und polykondensiert. Die Polykondensation erfolgt vorzugsweise nach dem Sol-Gel-Verfahren, wie es z.B. in den DE-A1 2758414, 2758415, 3011761, 3826715 und 3835968 beschrieben ist.

Zum Aufbau des organischen Netzwerkes werden die erfindungsgemäßen Silane bzw. das Polykondensat der erfindungsgemäßen Silane, gegebenenfalls unter Zusatz anderer copolymerisier-barer Komponenten, polymerisiert oder einer Polyaddition unterzogen. Die Polymerisation kann z.B. thermisch, redoxindu-ziert, photochemisch oder komplex-koordinativ-Induziert unter Einsatz von Methoden erfolgen, wie sie z.B. In den DE-A1 3143820, DE-A1 3826715 und DE-A1 3835968 beschrieben sind.

Als weitere polymerisierbare Komponenten können Verbindungen zugesetzt werden, die radikalisch und/oder ionisch polymerisierbar sind. Radikalisch polymerisierbare Verbindungen, die zugesetzt werden können, sind z.B. solche mit C=C-Doppelbindungen, wie z.B. Acrylate oder Methacrylate, wobei die Polymerisation über die C=C-Doppelbindungen erfolgt. Ionisch polymerisierbare Verbindungen, die zugesetzt werden können, enthalten z.B. Ringsysteme, die kationisch ringöffnend polymerisierbar sind, wie z.B. Spiroorthoester, Spiroorthocarbonate, bicyclische Spiroorthoester, Mono- oder Oligoepoxide. Es können aber auch Verbindungen zugesetzt werden, die sowohl ionisch als auch radikalisch polymerisierbar sind, wie z.B. Methocryloyl-Spiroorthoester. Diese sind radikalisch über die C=C-Doppelbindung und kationisch unter Ringöffnung polymerisierbar. Die Herstellung dieser Systeme ist z.B. im Journal f. prakt. Chemie, Band 330, Heft2, 1988, S. 316-318, beschrieben. Desweiteren können die erfindungsgemäßen Silane In Systemen eingesetzt werden, wie sie z.B. in der DE 4405261 beschrieben sind.

Ferner ist es möglich, andere bekannte, silan-gebundene cyclische Systeme zuzusetzen, die mit einpolymerisiert werden können. Solche Systeme enthalten z.B. Epoxidreste.

Die erfindungsgemäßen Silane können auch durch Polyaddition (z.B. Thlol-Addition) In makromolekulare Massen übergeführt werden. Ebenso ist es möglich, die Polyaddition im Anschluß an die hydrolytische Kondensation der erfindungsgemäßen Silane durchzuführen. Enthält z.B. das zu addierende Thiol mindestens zwei Mercaptogruppen, so ist der Aufbau eines mehrdimensionalen, organischen Netzwerkes möglich. Werden zur Polyaddition z.B. hydrolysierbare Thiosilane herangezogen, so wird bereits dann ein mehrdimensionales Netzwerk aufgebaut, wenn im Thiosilan nur eine Mercaptogruppe vorhanden ist. Das allgemeine Reaktionsschema sieht wie folgt aus ; 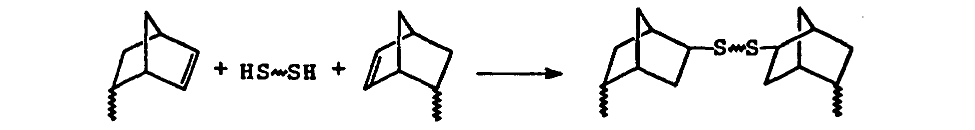 Ohne Einschränkung der Allgemeinheit sind konkrete Beispiele für geeignete Mehrfachthiole : 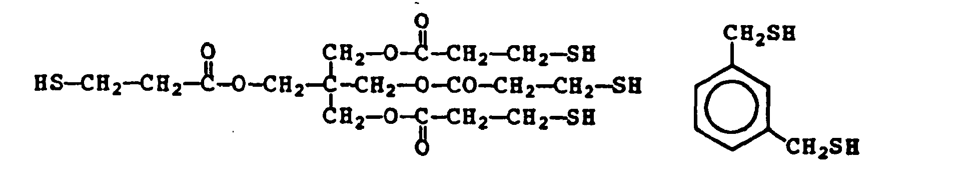 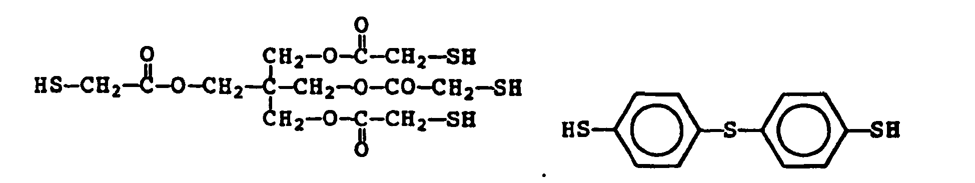 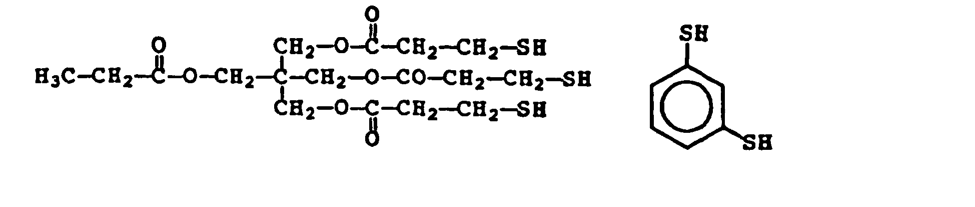 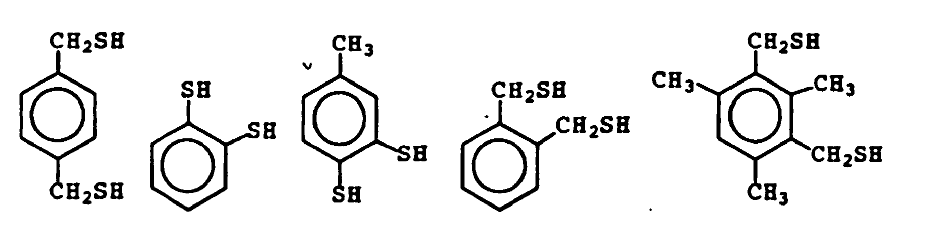 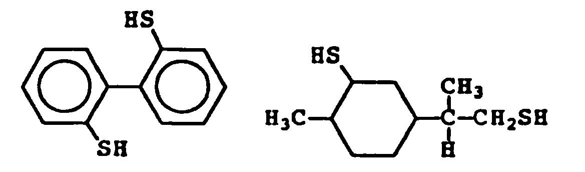 H₃C-CH(SH)-CH₂SH, H₃C-CH(SH)-CH(SH)-CH₃, HSCH₂-CH₂-S-CH₂-CH₂SH und HS-(CH₂)ₙ-SH mit n = 2 bis 9.

Werden als Thiole hydrolysierbare Silane eingesetzt, die Mercaptogruppen aufweisen, so bietet dies den Vorteil, daß derartige Silane über die Thiol-En-Addition In das organische Netzwerk und über die hydrolytische Kondensation In das anorganische Netzwerk eingebaut werden können. Dadurch wird es möglich, die Vernetzungsdichte der Polykondensate bzw. der Polyaddukte variabel zu gestalten und den Erfordernissen des jeweiligen Anwendungsfalles anzupassen. Derartige Silane sind nach üblichen Methoden erhältlich. Ohne Einschränkung der Allgemeineheit sind konkrete Beispiele: HS-(CH₂)₃-Si(OC₂H₅)₃, HS-(CH₂)₃-SiCH₃(OCH₃)₂ und HS-(CH₂)₃-Si(CH₃)₂(OC₂H₅).

Überraschenderweise wurde nun gefunden, daß Silane, die mindestens zwei Thiolgruppen aufweisen und die der allgemeinen Formel XV entsprechen, ganz besonders gut zur Vernetzung der erfindungsgemäßen Silane oder der Polykondensate aus diesen Silanen geeignet sind.

[(HS-R⁵)ₙR⁶-S-E-R⁵]ₐSiXₓR³₄₋ₐ₋ₓ (XV)

Die. Reste und Indices der allgemeinen Formel XV sind gleich oder verschieden und haben folgende Bedeutung :

| | | |
|---|---|---|
| E | = | -CO-NH-, -CS-NH-, -CH₂-CH₂- oder -CH₂-CH(OH)- |
| R³ | = | Alkyl, Alkenyl, Aryl, Alkylaryl oder Arylalkyl mit jeweils 1 bis 15 C-Atomen, wobei diese Reste durch Sauerstoff- oder Schwefelatome, durch Ester-, Corbonyl-, Amid- oder Aminogruppen unterbrochen sein können; |
| R⁵ | = | Alkylen, Arylen, Arylenolkylen oder Arylenalkylen mit jeweils 1 bis 15 C-Atomen, wobei diese Reste durch Sauerstoff- oder Schwefelatome, durch Ester-, Carbonyl-, Amid- oder Aminogruppen unterbrochen sein können; |
| R⁶ | = | Alkylen, Arylen, Arylenalkylen oder Arylenalkylen mit jeweils 1 bis 15 C-Atomen, wobei diese Reste durch Sauerstoff- oder Schwefelatome, durch Ester-, Carbonyl-, Amid- oder Aminogruppen unterbrochen sein können; |
| X | = | Wasserstoff, Halogen, Hydroxy, Alkoxy, Acyloxy, Alkylcarbonyl, Alkoxycar-bonyl oder NR"₂, mit R" = Wasserstoff, Alkyl oder Aryl; |
| a | = | 1, 2 oder 3; |
| n | = | 2, 3, 4 oder 5; |
| x | = | 1, 2 oder 3; |

Derartige " Oligothiolsilane " sind aus dem Stand der Technik nicht bekannt und eignen sich ganz besonders gut für Thiol-En-Additionen. Die Silane der allgemeinen Formel XV sind über die Reste X hydrolytisch kondensierbar und über die Thiol-gruppen (poly)addierbar. Über die hydrolytische Kondensation sind sie In ein anorganisches Netzwerk und über die Polyaddition in ein organisches Netzwerk einbaubar. Die Silane der allgemeinen Formel XV sind alleine oder zusammen mit anderen cokondensierbaren Verbindungen nach üblichen Methoden, z.B. über ein Sol-Gel-Verfahren, zu kieselsäure(hetero)polykondensaten verarbeitbar, die dann anschließend durch Polyaddition (z.B. eine Thiol-En-Addition) vernetzt werden können. Die Silane der allgemeinen Formel XV sind aber auch durch Polyaddition, z.B. durch eine Thiol-En-Addition, zu Polyaddukten verarbeitbar, die dann anschließend durch hydrolytische Kondensation weiter verfestigt werden können.

Die Silane der allgemeinen Formel XV sind gemäß folgenden allgemeinen Reaktionsschemata erhältlich. Dabei werden Oligothiole an Silane addiert, deren organische(r) Rest(e) Isocyanat-, Thioisocyanat- oder Epoxidgruppen oder C=C-Doppelbindungen aufweisen. Derartige Silane sind käuflich erwerbbar oder nach Methoden herstellbar, wie sie z.B. in "Chemie und Technologie der Silicone" (W. Noll, Verlag Chemie GmbH, Wein-heim/Bergstraße, 1968) beschrieben sind.

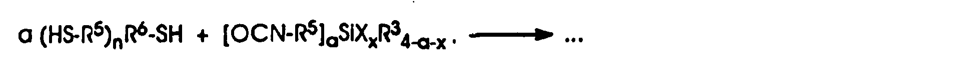

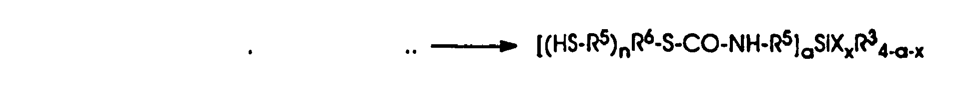

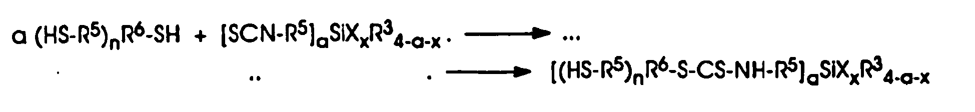

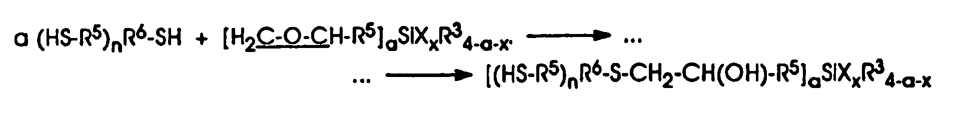

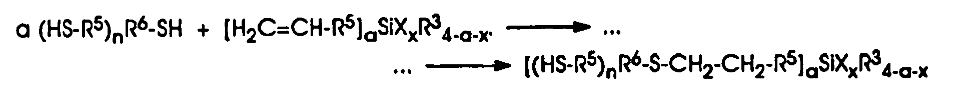

Ohne Einschränkung der Allgemeinheit Ist hierfür ein konkretes Beispiel :

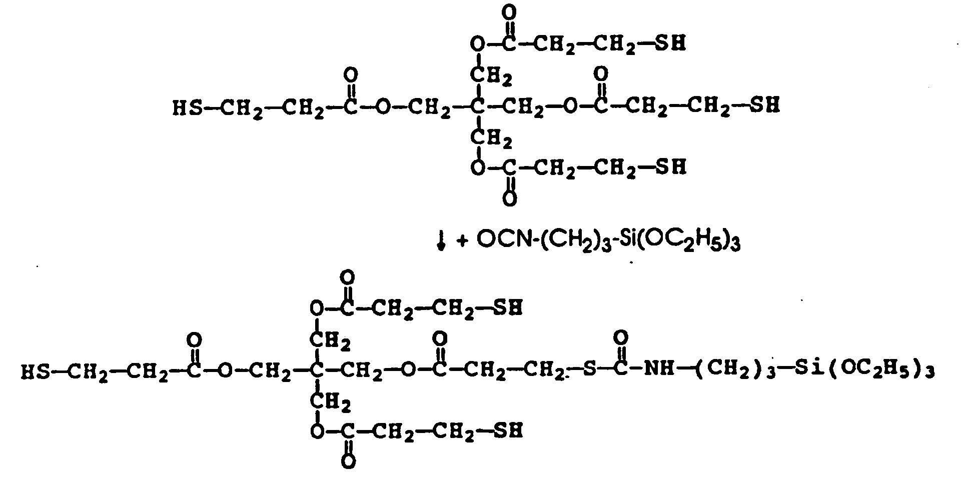

Die erfindungsgemäßen Silane stellen hoch reaktive Systeme dar, die zu Poly(hetero)kondensaten führen, die z.B. bei UV-Bestrohlung zu mechanisch stabilen Überzügen oder Form- bzw. Füllkörpern führen. Die erfindungsgemäßen Silane sind über einfache Additions- und Kondensationsreaktionen herstellbar und sie können durch geeignete Auswahl der Ausgangsverbindungen eine varilerbare Anzahl reaktiver Gruppen unterschiedlicher Funktionalität aufweisen.

Bei Anwesenheit von zwei oder mehr bicyclischen Resten und/oder bei Einsatz von Mehrfachthiolen ist die Ausbildung eines dreidimensionalen, organischen Netzwerkes möglich. Über den Abstand zwischen dem Si-Atom und dem bicycllschen Rest, d.h. über die Kettenlänge, und über die Anwesenheit weiterer funktioneller Gruppen in dieser Kette, können die mechanischen Eigenschaften (z.B. Flexibilität) und die physikalisch-chemischen Elgenschaften (Adsorption, Brechzahl, Haftung etc.) der Poly(hetero)kondensate beeinflußt und den Anforderungen des jeweiligen Anwendungsfalles angepaßt werden. Dabei führen aliphatische Gruppen zu flexiblen und aromatische Gruppen zu starren Produkten. Durch die Anzahl der zur Vernetzung befähigten Gruppen (SH-Gruppen und z.B. Norbornen-Reste) ist die Vernetzungsdichte einstellbar, die dann ebenfalls die Eigenschaften und damit die Einsatzmöglichkeiten der Poly(hetero)kondensate beeinflußt.

Durch die Ausbildung eines anorganischen Netzwerkes können ebenfalls je nach Art und Anzahl der hydrolysierbaren Gruppen (z.B. Alkoxygruppen) sllicon- oder glasartige Eigenschaften der Poly(hetero)kondensate eingestellt werden.

Die erfindungsgemäßen Silane besitzen relativ hohe Molekulargewichte und dementsprechend eine verminderte Flüchtigkeit, so daß die toxische Gefährdung während der Verarbeitung und Applikation geringer ist. Bei der anorganischen und/oder organischen Vernetzung bilden sich Polysiloxane mit nochmals erniedrigter Flüchtigkeit.

Berücksichtigt man dann noch die Variationsmöglichkeiten der cokondensierbaren und copolymerisierbaren bzw. coaddierbaren Komponenten, so wird offenbar, daß über die erfindungsgemäßen Silane Kleselsöure(hetero)polykondensate zur Verfügung ge-stellt werden, die in vielfältiger Weise an vorgegebene Einsatzgebiete angepaßt werden können, und die deshalb auf allen Gebieten, auf denen bereits bisher Kleselsöure(hetero)polykondensate eingesetzt werden, Verwendung finden können, aber auch neue Verwendungsmöglichkeiten eröffnen, z.B. auf dem Gebiet der Optik, der Elektronik, der Medizin, der Optoelektronik, der Verpackungsmittel für Lebensmittel etc.

Die erfindungsgemäßen Silane, bzw. deren Polykondensate, Polymerisate oder Polyaddukte, können entweder als solche verwendet werden oder In Zusammensetzungen, die zusätzlich an den Verwendungszweck angepaßte Additive enthalten, z.B. übliche Lackadditive, Lösungsmittel, Füllstoffe, Photoinitiatoren, thermische Initiatoren, Verlaufsmittel und Pigmente. Die erfindungsgemäßen Silane oder die silanhaltigen Zusammensetzungen eignen sich z.B. zur Herstellung von Beschichtungs-, Füllstoff- oder Bulkmaterialien, von Klebstoffen und Spritzgußmassen, von Fasern, Partikeln, Folien, Haftvermittlern, von Abformmassen und von Einbettmaterialien. Beschichtungen und Formkörper aus den erfindungsgemäßen Silanen haben den Vorteil, daß sie photochemisch strukturierbar sind. Spezielle Anwendungsgebiete sind z.B. die Beschichtung von Substraten aus Metall, Kunststoff, Papier, Keramik etc. durch Tauchen, Gießen, Streichen, Spritzen, elektrostatisches Spritzen, Elektrotauchlocklerung etc., der Einsatz für optische, opto-elektrische oder elektronische Komponenten, die Herstellung von Füllstoffen, Fasern oder Folien, die Herstellung von kratzfesten und/oder abriebfesten Korrosionsschutzbeschichtungen, die Herstellung von Formkörpern, z.B. durch Spritzguß, Formgießen, Pressen, Rapid-Prototyping oder Extrusion, die Herstellung von (Contact)Unsen und die Herstellung von Compositen, z.B. mit Fasern, Füllstoffen oder Geweben.

Neben den erfindungsgemäßen Silanen der Formel (I) können noch weitere hydrolytisch kondensierbare Verbindungen des Siliciums, des Bors, des Aluminiums, des Phosphors, des Zinns, des Bleis, der Übergangsmetalle, der Lanthaniden oder Actiniden eingesetzt werden. Diese Verbindungen können entweder als solche oder bereits In vorkondensierter Form zur Herstellung der Polykondensate herangezogen werden. Bevorzugt ist es, wenn mindestens 10 Mol-%, insbesondere mindestens 80 Mol-% und speziell mindestens 90 Mol-%, auf der Basis mornomerer Verbindungen, der zu Herstellung der Kieseisäure(hetero)po-lykondensate herangezogenen Ausgangsmoterialien Siliciumver-bindungen sind.

Ebenso ist es bevorzugt, wenn den Kieselsäure(hetero)polykondensaten mindestens 5 Mol-%, z.B. 25 bis 100 Mol-%, Insbe-sondere 50 bis 100 Mol-% und speziell 75 bis 100 Mol-%, jeweils auf der Basis monomerer Verbindungen, an einem oder mehreren der erfindungsgemäßen Silane zugrundellegen.

Unter den von Silanen der allgemeinen Formel (I) verschiedenen, hydrolytisch kondensierbaren Siliciumverbindungen, die gegebenenfalls eingesetzt werden können, sind solche der allgemeinen Formel VIII besonders bevorzugt,

Rₐ(R"Z')_{b}SiX_{4-(a+b)} (VIII)

In der die Reste R,R", X und Z' gleich oder verschieden sind und folgende Bedeutung haben:

| | | |
|---|---|---|
| R | = | Alkyl, Alkenyl, Aryl, Alkylaryl oder Arylalkyl, |
| R" | = | Alkylen oder Alkenylen, wobei diese Reste durch Sauerstoff- oder Schwefelatome oder -NH-Gruppen unterbrochen sein können, |
| X | = | Wasserstoff, Halogen, Hydroxy, Alkoxy, Acyloxy, Alkylcarbonyl, Alkoxycarbonyl oder NR'₂, mit R' = Wasserstoff, Alkyl oder Aryl, |
| Z' | = | Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe, |
| a | = | 0, 1, 2, oder 3, |
| b | = | 0, 1, 2, oder 3, mit a+b = 1,2 oder 3. |

Solche Silane sind z.B. in der DE 34 07 087 C2 beschrieben. Die Alkyl-Reste sind z.B. geradkettige, verzweigte oder cyclische Reste mit 1 bis 20, vorzugsweise mit 1 bis 10 Kohlenstoffatomen, und besonders bevorzugt sind niedere Alkylreste mit 1 bis 6 Kohlenstoffatomen. Spezielle Beispiele sind Methyl, Ethyl, n-Propyl, i-Propyl, n-Butyl, s-Butyl, t-Butyl, i-Butyl, n-Pentyl, n-Hexyl, Cyclohexyl, 2-Ethylhexyl, Dodecyl und Octadecyl.

Die Alkenylreste sind z.B. geradkettige, verzweigte oder cyclische Reste mit 2 bis 20, vorzugsweise mit 2 bis 10 Kohlenstoffatomen, und besonders bevorzugt sind niedere Alkenylreste mit 2 bis 6 Kohlenstoffatomen, wie z.B. Vinyl, Allyl oder 2-Butenyl.

Bevorzugte Arylreste sind Phenyl, Biphenyl und Naphthyl.

Die Alkoxy-, Acyloxy-, Alkylcarbonyl-, Alkoxycarbonyl- und Aminoreste leiten sich vorzugsweise von den oben genannten Alkyl- und Arylresten ab. Spezielle Beispiele sind Methoxy, Ethoxy, n- und l-Propoxy, n-, i-, s- und t-Butoxy, Methylamino, Ethylamino, Dimethylamino, Diethylamino, N-Ethylanilino, Acetyloxy, Propionyloxy, Methylcarbonyl, Ethylcarbonyl, Methoxycarbonyl, Ethoxycarbonyl, Benzyl, 2-Phenylethyl und Tolyl.

Die genannten Reste können gegebenenfalls einen oder mehrere Substituenten tragen, z.B. Halogen, Alkyl, Hydroxyalkyl, Alkoxy, Aryl, Aryloxy, Alkylcarbonyl, Alkoxycarbonyl, Furfuryl, Tetrahydrofurfuryl, Amino, Alkylamino, Dialkylomino, Trialkylammonium, Amido, Hydroxy, Formyl, Carboxy, Mercapto, Cyano, Nitro. Epoxy, SO₃H und PO₄H₂.

Unter den Halogenen sind Fluor. Chlor und Brom bevorzugt.

Spezielle Beispiele für hydrolytisch kondensierbare Silane der allgemeinen Formel (VIII) sind:
CH₃-Si-Cl₃, CH₃-Si-(OC₂H₅)₃, C₂H₅-Si-Cl₃, C₂H₅-Si-(OC₂H₅)₃, CH₂=CH-Si-(OC₂H₅)₃, CH₂=CH-Si-(OC₂H₄OCH₃)₃, (CH₃)₂-Si-Cl₂, CH₂=CH-Si-(OOCCH₃)₃, (CH₃)₂-Si-(OC₂H₅)₂, (C₂H₅)₃-Si-Cl, (C₂H₅)₂-Si-(OC₂H₅)₂, (CH₃)₂(CH₂=CH)-Si-Cl₂, (CH₃)₃-Si-Cl, (t-C₄H₉)(CH₃)₂-Si-Cl, (CH₃O)₃-Si-C₃H₆-NH-C₂H₄-NH-C₂H₄-NH₂, (CH₃O)₃-Si-C₃H₆-SH, (CH₃O)₃-Si-C₃H₆-NH-C₂H₄ NH₂, (CH₃O)₃-Si-C₃H₆-Cl, (CH₃O)₃-Si-C₃H₆-O-C(O)-C(CH₃)=CH₂,
(CH₃)₂(CH₂=CH-CH₂)-Si-Cl, (C₂H₅O)₃-Si-C₃H₆-NH₂, (C₂H₅O)₃-Si-C₃H₆-CN,

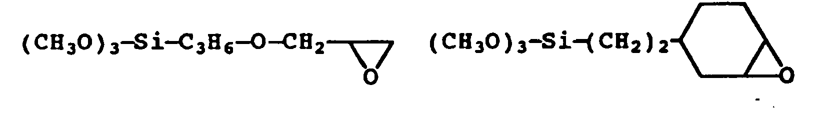

Unter den von Silanen der allgemeinen Formel 1 verschiedenen, hydrolytisch kondensierbaren Siliciumverbindungen, die gegebenenfalls noch eingesetzt werden können, sind solche der allgemeinen Formel IX ebenfalls bevorzugt,

{XₙRₖSi[(R²A)₁]₄₋₍ₙ₊ₖ₎}ₓB (IX)

In der die Reste A, R, R² und X gleich oder verschieden sind und folgende Bedeutung haben.

| | | |
|---|---|---|
| A | = | O, S, PR', POR', NHC(O)O oder NHC(O)NR', mit R' = Wasserstoff, Alkyl oder Aryl, |
| B | = | geradkettiger oder verzweigter organischer Rest, der sich von einer Verbindung B' mit mindestens einer (für I = 1 und A = NHC(O)O oder NHC(O)NR') bzw. mindestens zwei C=C-Doppelbindungen und 5 bis 50 Kohlenstoffatomen ableitet, mit R'= Wasserstoff, Alkyl oder Aryl, |
| R | = | Alkyl, Alkenyl, Aryl, Alkylaryl oder Arylalkyl, |
| R² | = | Alkylen, Arylen oder Alkylenarylen, |
| X | = | Wasserstoff, Halogen, Hydroxy, Alkoxy, Acyloxy, Alkylcarbonyl, Alkoxycarbonyl oder NR'₂, mit R' = Wasserstoff, Alkyl oder Aryl, |
| n | = | 1, 2 oder 3, |
| k | = | 0, 1 oder 2, |
| l | = | 0 oder 1, |
| x | = | eine ganze Zahl, deren Maximalwert der Anzahl von Doppelbindungen In der Verbindung B' minus 1 entspricht, bzw. gleich der Anzahl von Doppelbindungen in der Verbindung B' ist, wenn l = 1 und A für NHC(O)O oder NHC(O)NR' steht. |

Solche Silane sind In der DE 4011044 und in der EP 91105355 ausführlichst beschrieben.

Die erfindungsgemäßen Silane müssen für die Weiterverarbeitung zu den Poly(hetero)kondensaten nicht unbedingt extra isoliert werden. Es ist auch möglich, in einem Eintopf-Verfahren, diese Silane zunächst herzustellen und dann - gegebenenfalls nach Zusatz weiterer hydrolysierbarer Verbindungen - hydrolytisch zu kondensieren.

Unter den gegebenenfalls eingesetzten hydrolysierbaren Aluminiumverbindungen sind diejenigen besonders bevorzugt, die die allgemeine Formel AlR°₃ aufweisen, in der die Reste R°, die gleich oder verschieden sein können, ausgewählt sind aus Halogen, Alkoxy, Alkoxycarbonyl und Hydroxy. Hinsichtlich der näheren (bevorzugten) Definitionen dieser Reste kann auf die Ausführungen im Zusammenhang mit den geeigneten hydrolysierbaren Siliciumverbindungen verwiesen werden. Die soeben genannten Gruppen können auch ganz oder teilweise durch Chelatliganden ersetzt sein, z.B. durch Acetylaceton, Acetessigsäureester, Essigsäure oder durch Carbonsäurederivate der allgemeinen Formel 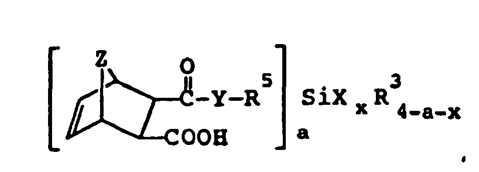 wie sie bei der Herstellung der erfindungsgemäßen Silane näher erläutert ist. Besonders bevorzugte Aluminlumverbindungen sind Aluminiumalkoxide und -halogenide. In diesem Zusammenhang können als konkrete Beispiele genannt werden: Al(OCH₃)₃, Al(OC₂H₅)₃, Al(O-n-C₃H₇)₃, Al(O-i-C₃H₇)₃, Al(OC₄H₉)₃, Al(O-i-C₄H₉)₃, Al(O-s-C₄H₉)₃, AlCl₃ und AlCl(OH)₂. Bei Raumtemperatur flüssige Verbindun-gen, wie z.B. Aluminium-sek-butylat und Aluminium-isopropylat, werden besonders bevorzugt.

Geeignete hydrolysierbare Titan- oder Zirkoniumverbindungen, die gegebenenfalls eingesetzt werden können, sind solche der allgemeinen Formel M X_{y}R_{z}, In der M Ti oder Zr bedeutet, y eine ganze Zahl von 1 bis 4 ist, Insbesondere 2 bis 4, z für 0, 1, 2 oder 3 steht, vorzugsweise für 0, 1 oder 2, und X und R wie Im Falle der allgemeinen Formel 1 definiert sind, wobei R jedoch nicht R²-R¹-R⁴-SiXₓR³₃₋ₓ ist. Dies gilt auch für die bevorzugten Bedeutungen. Besonders bevorzugt handelt es sich bei den Verbindungen um solche, bei denen y gleich 4 ist.

Wie im Falle der obigen AI-Verbindungen können auch komplexierte Ti- oder Zr-Verbindungen eingesetzt werden. Zusätzliche bevorzugte Komplexbildner sind hier Acrylsäure und Methacrylsäure.

Konkrete Beispiele für einsetzbare Zr- und Ti-Verbindungen sind die folgenden:
TiCl₄, Ti(OC₂H₅)₄, Ti(OC₃H₇)₄, Ti(O-i-C₃H₇)₄, Ti(OC₄H₉)₄, Ti(2-ethyihexoxy)₄, ZrCl₄, Zr(OC₂H₅)₄, Zr(OC₃H₇)₄, Zr(O-i-C₃H₇)₄, Zr(OC₄H₉)₄, Zr(2-ethylhexoxy)₄, ZrOCl₂

Weitere hydrolysierbare Verbindungen, die zur Herstellung der Polyheterokondensate eingesetzt werden können, sind z.B. Bortrihalogenide und Borsäureester, wie z.B. BCI₃, B(OCH₃)₃ und B(OC₂H₅)₃, Zinntetrahalogenide und Zinntetraalkoxide, wie z.B. SnCl₄ und Sn(OCH₃)₄, und Vanadyl-Verbindungen, wie z.B. VOCI₃ und VO(OCH₃)₃.

Wie bereits erwähnt, kann die Herstellung der Poly(hetero)kondensate in auf diesem Gebiet üblicher Art und Weise erfolgen. Werden praktisch ausschließlich Siliciumverbindungen eingesetzt, kann die hydrolytische Kondensation in den melsten Fällen dadurch erfolgen, daß man den zu hydrolysierenden Siliclumverbindungen, die entweder als solche oder gelöst in einem geeigneten Lösungsmittel vorliegen, das erforderliche Wasser bei Raumtemperatur oder unter leichter Kühlung direkt zugibt (vorzugsweise unter Rühren und In Anwesenheit eines Hydrolyse- und Kondensationskatalysators) und die resultierende Mischung daraufhin einige Zeit (ein bis mehrere Stunden) rührt.

Bei Anwesenheit reaktiver Verbindungen von Al. Ti oder Zr empfielt sich in der Regel eine stufenweise Zugabe des Wassers. Unabhängig von der Reaktivität der anwesenden Verbindungen erfolgt die Hydrolyse in der Regel bei Temperaturen zwischen -20 und 130 °C, vorzugsweise zwischen 0 und 30 °C bzw. dem Siedepunkt des gegebenenfalls eingesetzten Lösungsmittels. Wie bereits angedeutet, hängt die beste Art und Weise der Zugabe von Wasser vor allem von der Reaktivität der eingestzten Ausgangsverbindungen ab. So kann man z.B. die gelösten Ausgangsverbindungen langsam zu einem Überschuß an Wasser tropfen oder man gibt Wasser In einer Portion oder portionsweise den gegebenenfalls gelösten Ausgangsverbindungen zu. Es kann auch nützlich sein, das Wasser nicht als solches zuzugeben, sondern mit Hilfe von wasserhaltigen organischen oder anorganischen Systemen In das Reaktionssystem einzutragen. Als besonders geeignet hat sich In vielen Fällen die Eintragung der Wassermenge in das Reaktionsgemisch mit Hilfe von feuchtigkeitsbelodenen Adsorbentien, z.B. von Molekularsieben, und von wasserhaltigen, organischen Lösungsmitteln, z.B. von 80 %-igem Ethanol, erwiesen. Die Wasserzugabe kann aber auch über eine chemische Reaktion erfolgen, bei der Wasser im Laufe der Reaktion freigesetzt wird. Beispiele hierfür sind Veresterungen.

Wenn ein Lösungsmittel verwendet wird, kommen neben den niederen aliphatischen Alkoholen (z.B. Ethanol oder 1-Propanol) auch Ketone, vorzugsweise niedere Dialkylketone, wie Aceton oder Methylisobutylketon, Ether, vorzugsweise niedere Dialkylether wie Diethylether oder Dibutylether, THF, Amide, Ester, Insbesondere Essigsäureethylester, Dimethylformamid, Amine, insbesondere Triethylamin, und deren Gemische in Frage.

Die Ausgangsverbindungen müssen nicht notwendigerweise bereits alle zu Beginn der Hydrolyse (Polykondensation) vorhanden sein, sondern In bestimmten Fällen kann es sich sogar als vorteilhaft erweisen, wenn nur ein Teil dieser Verbindungen zunächst mit Wasser in Kontakt gebracht wird und später die restlichen Verbindungen zugegeben werden.

Um insbesondere bei Verwendung von Siliciumverbindungen verschiedenen hydrolysierbaren Verbindungen Ausfällungen während der Hydrolyse und der Polykondensation so weit wie möglich zu vermeiden, kann die Wasserzugabe In mehreren Stufen, z.B. in drei Stufen, durchgeführt werden. Dabei kann in der ersten Stufe z.B. ein Zehntel bis ein Zwangzigstel der zur Hydrolyse benötigten Wassermenge zugegeben werden. Nach kurzem Rühren kann die Zugabe von einem Fünftel bis zu einem Zehntel der erforderlichen Wassermenge erfolgen und nach weiterem kurzen Rühren kann schließlich der Rest zugegeben werden.

Die Kondensationszeit richtet sich nach den jeweiligen Ausgangskomponenten und deren Mengenanteilen, dem gegebenfalls verwendeten Katalysator, der Reaktionstemperatur, etc. Im allgemeinen erfolgt die Polykondensation bei Normaldruck, sie kann jedoch auch bei erhöhtem oder bei verringertem Druck durchgeführt werden.

Das so erhaltene Poly(hetero)kondensat kann entweder als solches oder nach teilweiser oder nahezu vollständiger Entfernung des verwendeten Lösungsmittels weiterverarbeitet werden. In einigen Fällen kann es sich als vorteilhaft erweisen, In dem nach der Polykondensation erhaltenen Produkt das überschüssige Wasser und das gebildete und gegebenenfalls zusätzlich eingesetzte Lösungsmittel durch ein anderes Lösungsmittel zu ersetzen, um das Poly(hetero)kondensat zu stabilisieren. Zu diesem Zweck kann die Reaktionsmischung z.B. im Vakuum bei leicht erhöhter Temperatur so weit eingedickt werden, daß sie noch problemlos mit einem anderen Lösungsmittel aufgenommen werden kann.

Sollen diese Poly(hetero)kondensate als Lacke für die Beschichtung (z.B. von Kunststoffen wie etwa PVC, PC, PMMA, PE, PS etc., von Glas. Papier, Holz, Keramik, Metall usw.) eingesetzt werden, so können diesen spätestens vor der Verwendung gegebenenfalls noch übliche Lackadditive zugegeben werden, wie z.B. Färbemittel (Pigmente oder Farbstoffe), Füllstoffe, Oxidationsinhibitoren, Flammschutzmittel, Verlaufsmittel, UV-Absorber, Stabilisatoren oder dergleichen. Auch Zusätze zur Erhöhung der leitfähigkeit (z.B. Grophit-Pulver, Silber-Pulver etc.) verdienen In diesem Zusammenhang Erwähnung. Im Falle der Verwendung als Formmasse kommt Insbesondere die Zugabe von anorganischen und/oder organischen Füllstoffen in Frage, wie z.B. organische und anorganische Partikel. Minera-Iien, (Glas- )Fasern, etc.

Die endgültige Härtung der Poly(hetero)kondensate erfolgt durch Polyaddition (z.B. Tiol-En-Additlon) und/oder nach Zugabe geeigneter Initiatoren thermisch, redox-induziert oder photochemisch, wobei auch mehrere Härtungsmechanismen parallel und/oder nacheinander ablaufen können. Dabei werden im Zuge einer ringöffnenden Polymerisation oder einer Polyaddition die C=C-Doppelbindungen verknüpft und es wird das organische Netzwerk aufgebaut. Aufgrund der relativ hohen Molekulargewichte der erfindungsgemäßen Silane bzw. durch spezielle Reaktionsmechanismen bei der Härtung, nämlich der Thiol-En-Polyadditlon, erfahren diese bei der Härtung nur eine sehr geringe Volumenschrumpfung.

Es ist auch möglich, dem Poly(hetero)kondensat vor der endgültigen Härtung, also vor der Polymerisation bzw. Polyaddition weitere ionisch und/oder radikalisch polymerisierbare Komponenten zuzusetzen. Radikalisch polymerisierbare Verbindungen, die zugesetzt werden können, sind z.B. solche mit C=C-Doppelbindungen, wie etwa Acrylate oder Methacrylate, wobei die Polymerisation über die C=C-Doppelbindungen verläuft. Ionisch polymerisierbare Verbindungen, die zugesetzt werden können, enthalten z.B. Ringsysteme, die Ionisch, ring-öffnend polymerisierbar sind, wie etwa Spiroorthoester, Spiroorthocarbonate, bicyclische Spiroorthoester, Mono- oder Oligoepoxide. Es können aber auch Verbindungen zugesetzt werden, die sowohl Ionisch als auch radikalisch polymerisierbar sind, wie z.B. Methacryloyl-Spiroorthoester. Diese sind radikalisch über die C=C-Doppelbindung und Ionisch unter Ringöffnung polymerisierbar. Diese Systeme sind z.B. im Journal f. prakt. Chemie, Band 330, Heft2, 1988, S. 316-318, oder im Journal of Polymer Science: Part C: Polymer Letters, Vol. 26, S. 517-520 (1988) beschrieben.

Erfolgt die Härtung des Poly(hetero)kondensates photochemisch, so werden diesem Photoinitiatoren zugesetzt, bei thermischer. Härtung thermische Initiatoren und bei redox-induzierter Härtung Starter-Aktivator-Systeme. Der Initiator kann in üblichen Mengen zugegeben werden. So kann z.B. einer Mischung, die 30 bis 50 Gew.-% Feststoff (Polykondensat) enthält, Initiatoren in einer Menge von z.B. 0.5 bis 5 Gew.-%. insbesondere von 1 bis 3 Gew.-%, bezogen auf die Mischung zugesetzt, werden.

Werden zur Herstellung der Poly(hetero)kondensate neben den erfindungsgemö-ßen Silanen weitere Komponenten eingesetzt, die reaktive Doppelbindungen enthalten, wie z.B. Silane gemäß der allgemeinen Formel IX, so kann über diese Doppelbindungen ebenfalls eine Polymerisation ablaufen, die thermisch und/ oder photochemisch und/oder redox Initiiert sein kann.

Als Photoinitiatoren können z.B. die im Handel erhältlichen eingesetzt werden. Beispiel hierfür sind Irgacure 184 (1-Hydroxycyclohexylphenylketon), Irgacure 500 (1-Hydroxycyclohexylphenylketon/Beruophenon), und andere von Ciba-Gelgy erhältliche Photoinitiatoren vom Irgacure-Typ; Darocure 1173, 1116, 1398, 1174 und 1020 (erhältlich von der Firma Merck), Benzophenon, 2-Chlorthloxonthon, 2-Methylthioxanthon, 2-Iso-propylthloxonthon, Benzoln, 4.4'-Dimethoxybenzoin etc. Erfolgt die Härtung mit sichtbaren Licht, so kann als Initiator z.B. Compherchionon eingesetzt werden.

Als thermische Initiatoren kommen insbesondere organische Peroxide in Form von Diacylperoxiden, Peroxydicarbonaten, Alkylperestern, Dialkylperoxiden, Perketalen, Ketonperoxiden und Alkylhydroperoxiden in Frage. Konkrete und bevorzugte Beispiele für thermische Initiatoren sind Dibenzoylperoxid, t-Butylperbenzoot und Azobisisobutyronitril.

Als Starter/Aktivator-Systeme können hierfür übliche eingesetzt werden, wie z.B. aromatische Amine (z.B. N,N-Bis-(2-hydroxy-ethyl)-p-toluldin) als Aktivatoren oder als Starter z.B. Dibenzoylperoxid, wobei über deren Konzatration bzw. deren Konzentrationsverhöltnis die Härtungszeit entsprechend dem jeweiligen Anwendungsfall eingestellt werden kann. Weitere Amine sind z.B. der DE 4310733 zu entnehmen.

Bei kovolent-nucteophiler Härtung werden als Initiatoren z.B. Verbindungen mit mindestens einer Amino-Gruppe zugesetzt. Geeignete Amine sind z.B. der DE 4405261 zu entnehmen.

Ein mit einem Initiator versehener Lack (Poly(hetero)kondensat) auf der Basis der erfindungsgemäßen Silane kann dann für Beschichtungen von Substraten eingesetzt werden. Für diese Beschichtung können übliche Beschichtungsverfahren angewendet werden. z.B. Tauchen, Fluten, Gießen, Schleudern, Walzen, Spritzen, Aufstreichen, elektrostatisches Spritzen und Elektrotauchlackierung. Erwähnt werden soll hier noch, daß der Lack nicht notwendigerweise lösungsmittelhaltig sein muß. Insbesondere bei Verwendung von Ausgangssubstanzen (Silanen) mit zwei Alkoxy-Gruppen am Si-Atom kann auch ohne Zusatz von Lösungsmitteln gearbeltet werden.

Vor der Härtung läßt man vorzugsweise den aufgetragenen Lack abtrocknen. Danach kann er, abhängig von der Art des Initiators, redox-induziert, thermisch oder photochemisch In an sich bekannter Weise gehärtet werden. Selbstverständlich sind auch Kombinationen von Aushärtungsmethoden möglich.

Erfolgt die Härtung des aufgetragenen Lackes durch Bestrahlen kann es sich von Vorteil erweisen, nach der Strohlungshörtung eine thermische Härtung durchzuführen, Insbesondere um noch vorhandenes Lösungsmittel zu entfernen oder um noch weitere reaktive Gruppen in die Härtung miteinzubeziehen.

Obwohl in den Poly(hetero)kondensaten auf der Basis der erfindungsgemäßen Silane bereits polymerisierbare Gruppen vorhanden sind, kann es sich in bestimmten Fällen als vorteilhaft erweisen, diesen Kondensaten vor oder bei ihrer Weiterverarbeitung (Härtung) noch weitere Verbindungen (vorzugsweise rein organischer Natur) mit z.B. ungesättigten Gruppen zuzugeben. Bevorzugte Beispiele für derartige Verbindungen sind Acrylsäure und Methacrylsäure sowie davon abgeleitete Verbindungen, Insbesondere Ester von vorzugsweise einwertigen Alkoholen (z.B. C₁₋₄-Alkanolen), (Meth)Acrylnltril, Styrol und Mischungen derselben. Im Fall der Verwendung der Poly-(hetero)kondensate zur Herstellung von Beschlchtungslacken können derartige Verbindungen gleichzeitig als Lösungs- bzw. Verdünnungsmittel wirken.

Die Herstellung von Formkörpern bzw. Formmassen aus Poly(hetero)kondensaten auf der Basis der erfindungsgemäßen Silane kann mit jeder auf diesem Gebiet gebräuchlichen Methode erfolgen, z.B. durch Pressen, Spritzguß, Formgießen, Extrusion etc. Auch zur Herstellung von Kompositmateriallen (z.B. mit Glasfaserverstärkung) sind die Poly(heteto)kondensate auf der Basis der erfindungsgemäßen Silane geeignet.

Eine weitere Anwendungsmöglichkeit finden die erfindungsgemäßen Silane bei der Herstellung von hydrolytisch kondensierbaren makromolekularen Massen. Dazu werden die erfindungsge-mäßen Silane alleine oder zusammen mit anderen radikalisch und/oder ionisch polymerisierbaren Komponenten polymerisiert und/oder einer Polyaddition unterworfen, wobei die endgültige Härtung dann durch hydrolytische Kondensation über die hydrolysierbaren Gruppen der erfindungsgemäßen Silane und eventuell weiterer, hydrolysierbarer Komponenten erfolgt. In diesem Fall wird zuerst durch Polymerisation bzw. Polyaddition das organische Netzwerk aufgebaut und dann durch hydrolytische Kondensation das anorganische.

An Hand von Ausführungsbeispielen wird die Herstellung und die Verwendung der erfindungsgemäßen Silane näher erläutert.

### Beispiel 1:

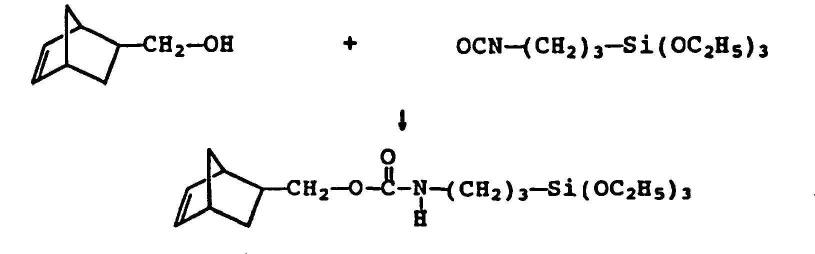

Zur Vorlage von 6.2 g (50 mmol) 2-(Hydroxymethyl)-5-norboren werden unter trockener Atmosphäre 30 mg DBTL als Katalysator und 12,4g (50 mmol) 3-Isocyantopropyltriethoxysilan zugetropft. Die Umsetzung kann über die Abnahme der Isocyanatbande Im IR-Spektrum bei 2272 cm⁻¹ und über die Entstehung und Zunahme der Urethanbande bei 1701/1723 cm⁻¹ verfolgt wer-den. Noch ca. 1-stündlgem Rühren bei RT wird das gewünschte flüssige Produkt erhalten und kann ohne Reinigung für weitere Umsetzungen verwendet werden.

| | | |
|---|---|---|
| IR Daten: | ν_{(NH ↔ Urethan)} | = 3342 cm⁻¹ |
| | ν_{(C=O ↔ Urethan)} | = 1701/1723 cm⁻¹ |
| | ν_{(CH ↔ Olefin)} | = 3059 cm⁻¹ |

### Beispiel 2 :(Hydrolyse/Kondensation des Produktes von Beispiel 1)

Das Produkt aus Beispiel 1 (50 mmol) wird In 50 ml Essigester zur Hydrolyse und Kondensation der Ethoxygruppen mit 2.2 g Wasser (+ Kot.) versetzt und gerührt. Nach vollständigem Umsatz (Nachweis über H₂O-Titration) kann die Lösung nach Zusatz einer äquimolaren Menge (bzgl. SH-Gruppen) einer Thiolkomponente z.B. zur Beschichtung (mit anschließender Aushärtung = Thiol-En-Polyoddition) von beliebigen Substraten verwendet werden.

### Beispiel 3 : (Hydrolyse/Kondensation des Produktes von Beispiel 1 nach Zusatz eines weiteren Silans)

Das Produkt aus Beispiel 1 (100 mmol) wird nach Zusatz von 16.0 g (100 mmol) Vinylmethyldiethoxysilan in 50ml Essigester zur Hydrolyse und Kondensation der Ethoxygruppen mit 2.2 g Wasser (+Kat.) versetzt und gerührt. Nach vollständigen Umsatz (Nachweis über H₂O-Titration) kann die Lösung nach Zu-satz einer äquimolaren Menge (bzgl. SH-Gruppen) einer Thiol-komponente z.B. zur Beschichtung (mit anschließender Aushärtung = Thiol-En-Polyaddition) von beliebigen Substraten ver-wendet werden. Weiterhin wird nach Aufarbeitung und Lösungsmittelabzug ein flüssiges Harz erhalten (Lösungsmittelfreie Applikation somit mölglich) und nach entsprechenden Zusatz einer Thiolkomponente und Härtung z.B. zur Formkörperher-stellung verwendet werden.

### Beispiel 4 :(Hydrolyse/Kondensation des Produktes von Beispiel 1 nach Zusatz eines Vinylsilans und eines Reaktivlösungsmittels)

Das Produkt aus Beispiel 1 (100 mmol) wird nach Zusatz von 16.0 g (100 mmol) Vinylmethyldiethoxysilan in 50 ml Essigester zur Hydrolyse und Kondensation der Ethoxygruppen mit 2.2 g Wasser (+Kat.) versetzt und gerührt. Nach vollständigem Umsatz (Nachwels über H₂O-Titration werden 20 mmol 1,12-Dodecandioldimethacrylat als Reaktivverdünner zugesetzt. Die resultierende Lösung kann nach Zusatz einer äquimolaren Menge (bzgl. SH-Gruppen) einer Thiolkomponente z.B. zur Beschichtung (mit anschließender Aushärtung = Thiol-En-Polyoddition) von beliebigen Substraten verwendet werden. Weiterhin wird nach Aufarbeitung und Lösungsmittelabzug ein flüssiges Harz erhalten (lösungsmittelfreie Applikation somit möglich). Nach Zusatz einer Thiolkomponente und Härtung kann dieses z.B. zur Formkörperherstellung verwendet werden. Wegen des Vorhandenseins von Methacrylatgruppen ist eine Härtung (Polymerisation der Methacrylatgruppen) auch ohne Thiolzusatz möglich.

### Beispiel 5 : (Thiol-En-Polyaddition unter Verwendung des Harzes aus Beispiel 4)

In 4.2 g des Harzes als En-Komponente aus Beispiel 4 werden 2.3 g (12 mmol, äquimolares Verhältnis zwischen SH- und C=C-Gruppen) 1.9-Nonandithiol als Thiol-Komponente und 1 % Irgacure 184 (UV-Initiotor der Fa. Ciba Gelgy) gelöst und die Mischung wird In eine Härtungsform gegeben. Die Doppelbindungen und die SH-Gruppen reagieren im Rahmen einer UV-Induzlerten, radikalischen Polyaddition, wodurch das Harz gehärtet wird. Dazu wird mit einem UV-Punktstrohier der Fa. Hönle bestrahlt. Es werden transparente, sehr flexible Formkörper erhalten.

### Beispiel 6 : (Thiol-En-Pollyoddition unter Verwendung des Harzes aus Beispiel 4)

In 4.2 g des Harzes als En-Komponente aus Beispiel 4 werden 12 mmol (äquimolares Verhältnis zwischen SH- und C=C-Gruppen) Pentaerythritoltetrakis-(3-mercaptoproplonat) als Thiol-Komponente und 1 % Irgacure 184 (UV-Initiator der Fa. Ciba Geigy) gelöst und die Mischung In eine Härtungsform gegeben. Die Doppelbindungen und SH-Gruppen reagieren im Rahmen einer UV-induzterten, radikalischen Polyaddition, wodurch das Harz ge-hörtet wird. Dazu wird mit einem UV-Punktstrahler der Fa. Hönle bestrahlt. Es werden transparente, in der Flexibilität deutlich reduzierte, also härtere Formkörper erhalten als wie in Beispiel 5. Durch eine Thiolkomponente mit 4 SH-Gruppen erfolgt eine stärkere Vernetzung als mit 1.9-Nonandithiot aus Beispiel 5.

### Beispiel 7 :

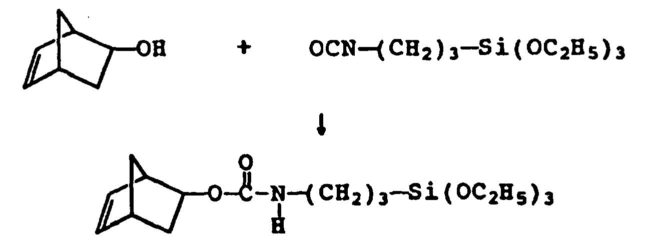

Zur Vorlage von 11.0 g (100 mmol) 5-Norbornen-2-ol werden unter trockener Atmosphäre 63 mg DBTL als Katlysator und 24.7 g (100 mmol) 3-Isocyonatopropyltriethoxysilan zugetropft. Die Umsetzung kann über die Abnahme der Isocyanatbande Im IR-Spektrum bei 2272cm⁻¹ und über die Entstehung und Zunahme der Urethanband bei 1700/1722 cm⁻¹ verfolgt werden. Nach ca. 2-stündigem Rühren bei RT wird das gewünschte Produkt erhalten und kann ohne Reinigung für weitere Umsetzungen verwendet werden.

| | | |
|---|---|---|
| IR-Daten: | ν_{(NH ↔ Urethan)} | = 3340 cm⁻¹ |
| | ν_{(C=O ↔ Urethan)} | = 1700/1722 cm⁻¹ |
| | ν_{(CH ↔ Olefin)} | = 3064 cm⁻¹ |
| | δ_{(C=C)} | = 724 cm⁻¹ |

### Beispiel 8 : (Hydrolyse und Kondensation des Produktes von Beispiel 7)

Das Produkt aus Beispiel 7 (100 mmol) wird In 100 ml Essigester zur Hydrolyse und Kondensation der Ethoxygruppen mit 4.3 g Wasser (+ Kat.) versetzt und gerührt. Nach vollständigem Umsatz (Nachweis über H₂O-Titration) kann die Lösung nach Zusatz einer äquimolaren Menge (bzgl. SH-Gruppen) einer Thiolkomponente z.B. zur Beschichtung (mit anschließender Aus-härtung = Thiol-En-Polyaddition) von beliebigen Substraten verwendet werden.

### Beispiel 9 : (Hydrolyse und Kondensation des Produktes von Beispiel 7 unter Zusatz eines Reaktivlösungsmittels)

Das Produkt aus Beispiel 7 (100 mmol) wird In 100 ml Essigester zur Hydrolyse und Kondensation der Ethoxygruppen mit 4.3 g Wasser (+ Kat.) versetzt und gerührt. Nach vollständigem Umsatz (Nachweis über H₂0-Tiotration) werden 40 mmol Rapi-Cure DVE-3 (CH₂=CH-O-CH₂-CH₂-O-CH₂-CH₂-O-CH₂-CH₂-O-CH=CH₂) als Reaktivverdünner zugegeben. Die resultierende Lösung kann nach Zusatz einer äquimolaren Menge (bzgl. SH-Gruppen) einer Thiolkomponente z.B. zur Beschichtung (mit anschließender Aushärtung = Thiol-En-Polyaddition) von beliebigen Substraten verwendet werden. Weiterhin wird nach Aufarbeitung und Lö-surigsrnittelabzug ein flüssiges Harz erhalten (Lösungsmittelfreie Applikation somit möglich), das nach entsprechendem Zusatz einer Thiolkomponente und Härtung z.B. zur Formkörperherstellung verwendet werden kann.

### Beispiel 10 :

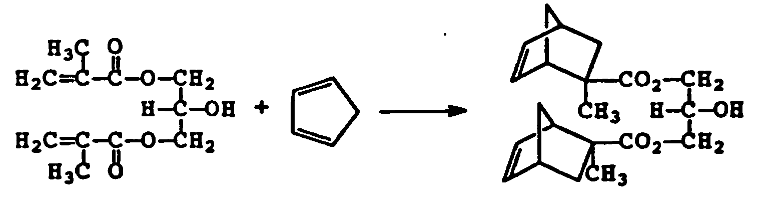

In eine auf 80°C geheizte Vorlage von 68.5 g (0.3 mol) Glycerlndlmetharcylat werden ca. 53 g (0.8 mol) Cyclopentadien (durch Spaltung von Dicyclopentadien frisch hergestellt) zudestilliert. Die Umsetzung im Sinne einer Diels-Alder-Reaktion kann mittels IR-Spektroskople verfolgt werden. Flüchtige Bestandteile (z.B. nicht-umgesetztes Cyclopentadien) werden nach vollständigem Umsatz des Methacrylates abgezogen, um das gewünschte, flüssige Produkt zu erhalten. Dies kann ohne Reinigung für weitere Umsetzungen verwendet werden.

| | | |
|---|---|---|
| IR-Daten : | ν_{(OH)} | = 3496 cm⁻¹ (breit) |
| | ν_{(CH ↔ Olefin)} | = 3062 cm⁻¹ |
| | ν_{(C=O ↔ Ester)} | = 1730 cm⁻¹ |
| | ν_{(C=C)} | = 1572 cm⁻¹ |
| | δ_{(C=C)} | = 725 cm⁻¹ |

### Beispiel 11 :

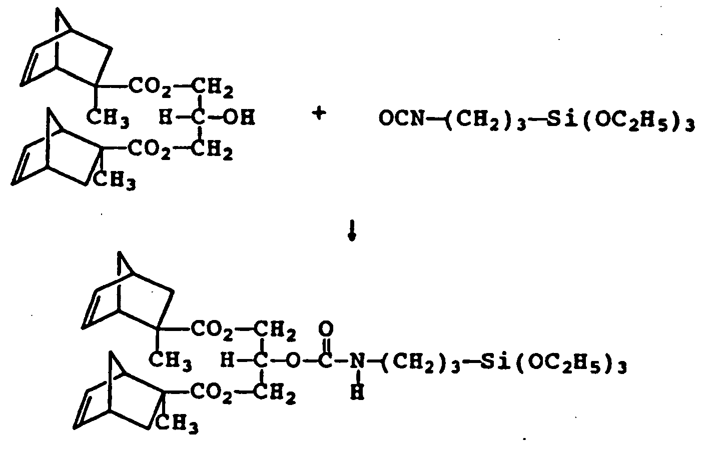

Zur Vorlage von 28.8 g (80 mmol) der Dinorbornenverbindung aus Beispiel 10 werden unter trockener Atmosphäre In THF als lösungsmittel und DBTL als Katalysator 19.8 g (80 mmol) 3-Isocyanatopropyltriethoxysilan zugetropft. Die Umsetzung kann über die Abnahme der isocyanatbande im IR-Spektrurn bei 2272 cm⁻¹ und über die Entstehung und Zunahme der Urethandbande bei 1733 cm⁻¹ verfolgt werden. Nach ca. 2-stündigem Rühren bei RT kann das gewünschte Produkt in Form der Lösung ohne Reinigung für weitere Umsetzungen verwendet bzw. nach Abzug des Lösungsmittels isollert werden.

| | | |
|---|---|---|
| IRDaten: | ν_{(NH ↔ Urethan)} | = 3380 cm⁻¹ (breit) |
| | ν_{(C=O ↔ Urethan,Ester)} | ca. 1733 cm⁻¹ |
| | ν_{(CH ↔ Olefin)} | = 3062 cm⁻¹ |
| | ν_{(C=C)} | = 1572 cm⁻¹ |
| | δ_{(C=C)} | = 725 cm⁻¹ |

### Beispiel 12: (Hydrolyse und Kondensation des Produktes von Beispiel 11)

Die Produktlösung aus Beispiel 11 (80 mmol) wird in 50 ml Es-sigester zur Hydrolyse und Kondensation der Ethoxgruppen mit 3.5 g Wasser (+ Kat.) versetzt und gerührt. Nach vollständi-gem Umsatz (Nachweis über H₂O-Titration) kann die nach Aufarbeitung klare Lösung nach Zusatz einer äquimolaren Menge (bzgl. SH-Gruppen) einer Thiolkomponente z.B. zur Beschichtung (mit anschließender Aushärtung = Thiol-En-Polyaddition) von beliebigen Substraten verwendet werden.

### Beispiel 13: (Hydrolyse und Kondensation des Produktes von Beispiel 11 und Zusatz eines Reaktivlösungsmittels)

Das Produkt aus Beispiel 11 (80 mmol) wird in 50 ml Es-sigester zur Hydrolyse und Kondensation der Ethoxygruppen mit 3.5 g Wasser (+Kat.) versetzt und gerührt. Nach vollständigem Umsatz (Nachweis über H₂O-Titration) werden 16 mmol 1.12-Dodecandioldimethacrylat als Reaktivverdünner zugegeben. Die resultierende Lösung kann nach Zusatz einer äquimolaren Menge (bzgl. SH-Gruppen) einer Thiolkomponente z.B. zur Beschichtung (mit anschließender Aushärtung = Thiol-En-Polyaddition) von beliebigen Susbstraten verwendet werden. Weiterhin wird nach Aufarbeitung und Lösungsmittelabzug ein flüssiges Harz erhalten (lösungsmittelfreie Applikation somit möglich), das nach entsprechendem Zusatz einer Thiolkomponente und Härtung z.B. zur Formkörperherstellung verwendet werden kann.

### Beispiel 14 : (thiol-En-Polyaddition unter Verwendung des Harzes aus Beispiel 13 Herstellung von Prüfkörpern zur Bestimmung mechanischer Kenndaten)

In 5.64 g des Harzes als En-Komponente aus Beispiel 13 werden 6 mmol (äquimolares Verhältnis zwischen SH- und C=C-Gruppen) Pentaerythritoltetrakis-(3-mercaptopropionat) als Thiol-Komponente und 1 % Irgacure 184 (UV-Initiator der Fa. Ciba Geigy) gelöst und in eine Stäbchenform (2x2x25mm) gegeben. Die Doppelbindungen und SH-Gruppen reagieren im Rahmen einer UV-induzierten, radikalischen Polyaddition, womit das Harz gehärtet wird. Dazu wird mit einem UV-Punktstrahler der Fa. Hönle bestrahlt. Mittels 3-Punktbiegeversuch wird das E-Modul sowie die Bruchfestigkeit des resultierenden, transparenten Stäbchens be-stimmt. Aufgrund der 2 Norbornengruppen pro Silaneinheit in der anorganischen Polymerstruktur, in Kombination mit den 4 SH-Gruppen der Thiolkomponente, resultiert eine sehr engmaschige Gesamtpolymerstruktur und damit ein vergleichsweise hohes E-Modul. E-Modul und damit die Flexibilität sind in weiten Bereichen über die Anzahl der OR-Gruppen und der Norbornengruppen im Silan und über die Anzahl der SH-Gruppen in der Thiolkomponente einstellbar.

| | |
|---|---|
| E-Modul | = 2000 MPa (± 100) |
| Festigkeit | = 90 MPa (± 4) |

### Beispiel 15: (Hydrolyse und Kondensation des Produktes von Beispiel 11 und Zusatz der Di-Norbornenverbindung aus Beispiel 10 als Reaktivlösungsmittel)

Die Produktlösung aus Beispiel 11 (50 mmol) wird zusammen mit 10 mmol der Dinorbornenverbindung aus Beispiel 10 in 50 ml Essigester zur Hydrolyse und Kondensation der Ethoxygruppen gelöst, mit 3.5 g Wasser (+ Kat.) versetzt und bei RT gerührt. Nach vollständigem Umsatz (Nachweis über H₂O-Titration) und Aufarbeitung kann die resultierende klare Lösung nach Zusatz einer äquimolaren Menge (bzgl. SH-Gruppen) einer Thiolkomponente z.B. zur Beschichtung (mit anschlie-ßender Aushärtung = Thiol-En-Polyaddition) von beliebigen Substraten verwendet werden. Weiterhin wird nach Lösungsmittelabzug ein flüssiges Harz erhalten (lösungsmittelfreie Applikation somit möglich), das nach entsprechendem Zusatz einer Thiolkomponente und Härtung z.B. zur Formkörperherstellung verwendet werden kann.

## Patentansprüche

1. Hydrolysierbare und polyaddierbare bzw. polymerisierbare Silane der allgemeinen Formel 1 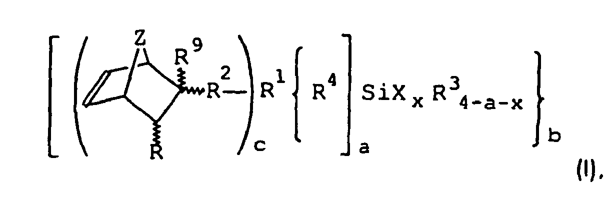 in der die Reste und Indices gleich oder verschieden sind und folgende Bedeutung haben:
| | | |
|---|---|---|
| R | = | Wasserstoff, R²-R¹-R⁴-SiXₓR³_{3-x'}, Alkyl, Alkenyl, Aryl, Alkylaryl oder Arylalkyl mit jeweils 1 bis 15 Kohlenstoffatomen, wobei diese Reste Sauerstoff- oder Schwefelatome, Carbonyl-, Amid- oder Aminogruppen enthalten können; |
| R¹ | = | Alkylen, Arylen, Arylenalkylen mit jeweils 0 bis 15 Kohlenstoffatomen, wobei diese Reste Sauerstoff- oder Schwefelatome, Ester-, Carbonyl-, Amid- oder Aminogruppen enthalten können; |
| R² | = | Alkylen, Arylen, Arylenalkylen mit jeweils 0 bis 15 Kohlenstoffatomen, wobei diese Reste Sauerstoff- oder Schwefelatome, Ester-, Carbonyl-, Amid- oder Aminogruppen enthalten können; |
| R³ | = | Alkyl, Alkenyl. Aryl, Alkylaryl oder Arylalkyl mit jeweils 1 bis 15 Kohlenstoffatomen, wobei diese Reste Sauerstoff- oder Schwefelatome, Ester-, Carbonyl-, Amid- oder Aminogruppen enthalten können; |
| R⁴ | = | -CHR⁶-CHR⁶-S-R⁵-, -CO-S-R⁵-, -CHR⁶-CHR⁶-NR⁶-R⁵-, -Y-CS-NH-R⁵-, -S-R⁵, -Y-CO-NH-R⁵-, -CO-NR⁶-R⁵-; |
| R⁵ | = | Alkylen, Arylen, Arylenalkylen mit jeweils 1 bis 15 Kohlenstoffatomen, wobei diese Reste Sauerstoff- oder Schwefelatome, Ester-, Carbonyl-, Amid- oder Aminogruppen enthalten können; |
| R⁶ | = | Wasserstoff, Alkyl oder Aryl mit 1 bis 10 Kohlenstoffatomen |
| R⁹ | = | Wasserstoff, Alkyl, Alkenyl, Aryl; Alkylaryl oder Arylalkyl mit jeweils 1 bis 15 Kohlenstoffatomen, wobei diese Reste Sauerstoff- oder Schwefelatome, Ester-, Corbonyl-, Amid- oder Aminogruppen enthalten können; |
| X | = | Wasserstoff, Halogen, Hydroxy, Alkoxy, Acyloxy, Alkylcarbonyl, Alkoxycarbonyl oder NR"₂, mit R" = Wasserstoff, Alkyl oder Aryl; |
| Y | = | -O- oder -NR⁶-; |
| Z | = | -O- oder -(CHR⁶)ₘ-, mit m = 1 oder 2; |
| a | = | 1, 2 oder 3, mit b = 1 für a = 2 oder 3; |
| b | = | 1, 2 oder 3, mit a = 1 für b = 2 oder 3; |
| c | = | 1 bis 6; |
| x | = | 1, 2 oder 3; |
| a+x | = | 2, 3 oder 4, |
mit der Maßgabe, dass Verbindungen der Formel 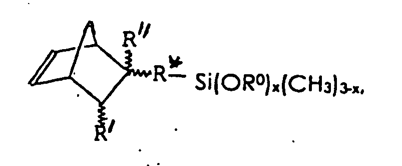 worin
R' = Wasserstoff, Methyl oder Ethyl ist,
R" = Wasserstoff, Methyl oder Ethyl ist,
R* = ein organischer Rest mit 1 bis 6 Kohlenstoffatomen ist,
R⁰ = Alkyl oder Acyl mit 1 bis 6 Kohlenstoffatomen ist, ausgenommen sind.

2. Hydrolysierbare und polyaddierbare bzw. polymerisierbare Silane nach Anspruch 1, **dadurch gekennzeichnet, daß** der Index a in der allgemeinen Formel 1 gleich 1 ist (Silane der allgemeinen Formel 11) und die Reste und Indices wie in Anspruch 1 definiert sind

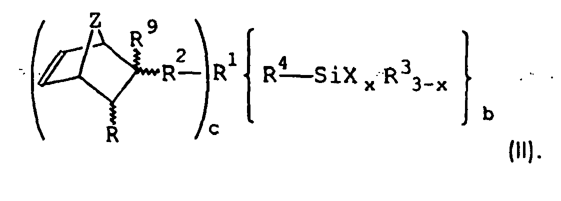

3. Hydrolysierbare und polyaddierbare bzw. polymerisierbare Silane nach Anspruch 1, **dadurch gekennzeichnet, daß** der Index b in der allgemeinen Formel I gleich 1 ist (Silane der allgemeinen Formel III) und die Reste und Indices wie in Anspruch 1 definiert sind

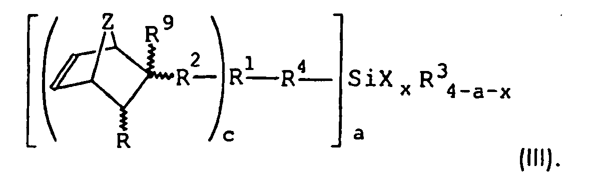

4. Hydrolysierbare und polyaddierbare bzw. polymerisierbare Silane nach Anspruch 1, **dadurch gekennzeichnet, daß** die Indices a und b in der allgemeinen Formel 1 gleich 1 sind (Silane der allgemeinen Formel IV) und die Reste und Indices wie in Anspruch 1 definiert sind

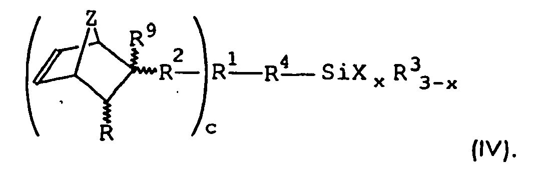

5. Hydrolysierbare und polyaddierbare bzw. polymerisierbare Silane nach Anspruch 1, **dadurch gekennzeichnet, daß** die Indices a und c in der allgemeinen Formel I gleich 1 sind (Silane der allgemeinen Formel V) und die Reste und Indices wie in Anspruch 1 definiert sind

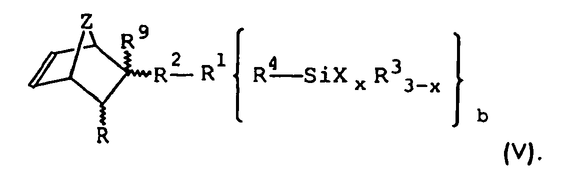

6. Hydrolysierbare und polyaddierbare bzw. polymerisierbare Silane nach Anspruch 1, **dadurch gekennzeichnet, daß** die Indices b und c in der allgemeinen Formel I gleich 1 sind (Silane der allgemeinen Formel VI) und die Reste und Indices wie in Anspruch 1 definiert sind

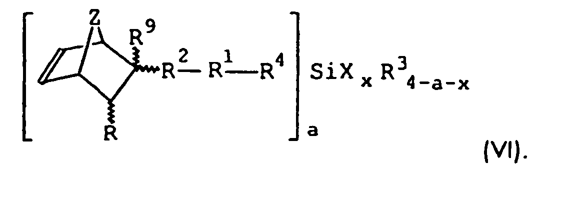

7. Hydrolysierbare und polyaddierbare bzw. polymerisierbare Silane nach Anspruch 1, **dadurch gekennzeichnet, daß** die Indices a, b und c in der allgemeinen Formel I gleich 1 sind (Silane der allgemeinen Formel VII) und die Reste und Indices wie in Anspruch 1 definiert sind

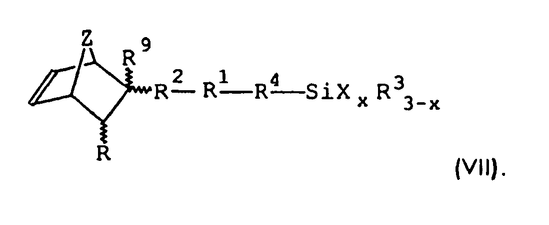

8. Verfahren zur Herstellung von Silanen nach einem der Ansprüche 1 bis 7, **dadurch gekennzeichnet, daß** man 1 bis b Mole eines Silans der Formel (HY-R⁵-)ₐSiXR³₄₋ₐ₋ₓ oder HₐSiXR³₄₋ₐ₋ₓ mit a Molen einer Verbindung der Formel XI oder XII umsetzt, wobei R⁷ OH, OR, CI oder H darstellt, und die übrigen Reste und Indices wie in Anspruch 1 definiert sind.

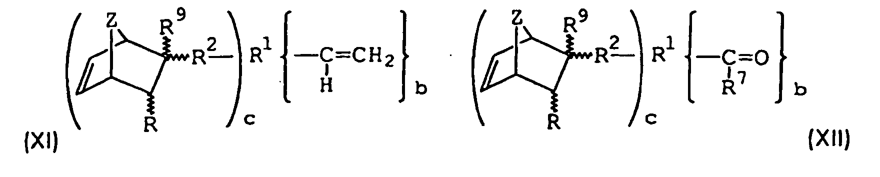

9. Verfahren zur Herstellung von Silanen nach einem der Ansprüche 1 bis 7, **dadurch gekennzeichnet, daß** man 1 bis b Mole eines Silans der Formel (R⁸-R⁵-)ₐSiXR³₄₋ₐ₋ₓ mit a Molen einer Verbindung der allgemeinen Formel XIII umsetzt, wobei R⁸ eine Thioisocyanat-, Isocyanat-, Epoxid- oder eine cyclische Anhydridgruppe darstellt und die übrigen Reste und Indices wie in Anspruch 1 definiert sind.

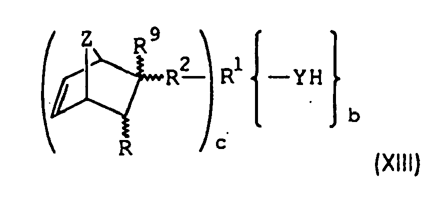

10. Verfahren zur Herstellung von Silanen nach einem der Ansprüche 1 bis 7, **dadurch gekennzeichnet, daß** man ein Furon-, Cyclopentadien- oder Cyclohexadien-Derivat einer Diels-Alder-Reaktion mit einem Silan der allgemeinen Formel [(H₂C=CH-)_{c}R¹]ₐSiXₓR₄₋ₐ₋ₓ unterzieht, wobei die Reste und Indices wie in Anspruch 1 definiert sind.

11. Verwendung von hydrolysierbaren und polyaddierbaren bzw. polymerisierbaren Silanen zur Herstellung von organisch modifizierten Kieselsöurepolykondensaten oder von organisch modifizierten Kieseisäureheteropolykondensaten durch hydrolytische Kondensation einer oder mehrerer hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, gegebenenfalls in Anwesenheit eines Katalysators und/oder eines Lösungsmittels, durch Einwirkung von Wasser oder von Feuchtigkeit, **dadurch gekennzeichnet, daß** 5 bis 100 Mol-%. auf der Basis monomerer Verbindungen, der hydrolylisch kondensierbaren Verbindungen aus Silanen der allgemeinen Formel (I) wie in Anspruch 1 definiert ausgewählt werden.

12. Verwendung von hydrolysierbaren und polyaddierbaren bzw. polymerisierbaren Silanen nach Anspruch 11, **dadurch gekennzeichnet, daß** der Index a in der allgemeinen Formel I wie in Anspruch 1 definiert gleich 1 ist (Silane der allgemeinen Formel II) und die Reste und Indices wie in Anspruch 1 definiert sind.

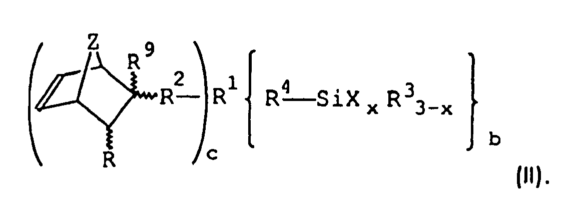

13. Verwendung von hydrolysierbaren und polyaddierbaren bzw. polymerisierbaren Silanen nach Anspruch 11, **dadurch gekennzeichnet, daß** der Index b in der allgemeinen Formel I wie in Anspruch 1 definiert gleich 1 ist (Silane der allgemeinen Formel III) und die Reste und Indices wie in Anspruch 1 definiert sind

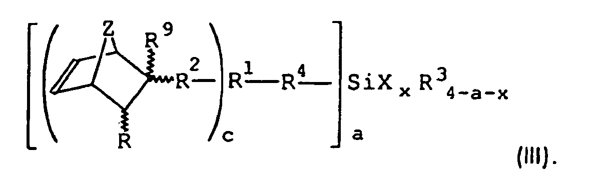

14. Verwendung von hydrolysierbaren und polyaddierbaren bzw. polymerisierbaren Silanen nach Anspruch 11, **dadurch gekennzeichnet, daß** die indices a und b in der allgemeinen Formel I wie in Anspruch 1 definiert gleich 1 sind (Silane der allgemeinen Formel IV) und die Reste und Indices wie in Anspruch 1 definiert sind

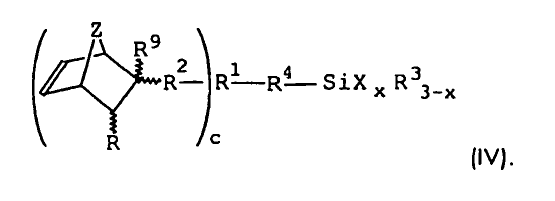

15. Verwendung von hydrolysierbaren und polyaddierbaren bzw. polymerisierbaren Silanen nach Anspruch 11, **dadurch gekennzeichnet, daß** die Indices a und c in der allgemeinen Formel I wie in Anspruch 1 definiert gleich 1 sind (Silane der allgemeinen Formel V) und die Reste und Indices wie in Anspruch 1 definiert sind

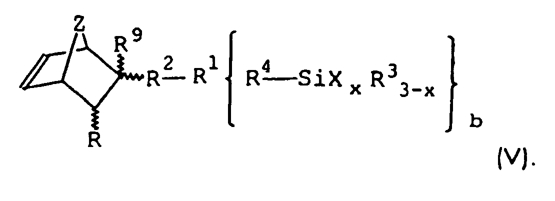

16. Verwendung von hydrolysierbaren und polyaddierbaren bzw. polymerisierbaren Silanen nach Anspruch 11, **dadurch gekennzeichnet, daß** die Indices b und c in der allgemeinen Formel I wie in Anspruch 1 definiert gleich I sind (Silane der allgemeinen Formel VI) und die Reste und indices wie in Anspruch 1 definiert sind

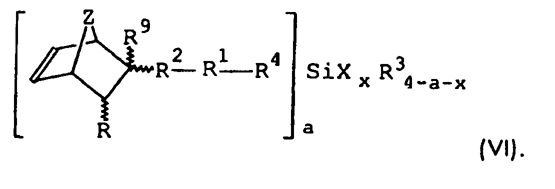

17. Verwendung von hydrolysierbaren und polyaddierbaren bzw. polymerisierbaren Silanen nach Anspruch 11, **dadurch gekennzeichnet, daß** die indices a, b und c in der allgemeinen Formel I wie in Anspruch I definiert gleich 1 sind (Silane der allgemeinen Formel VII) und die Reste und Indices wie in Anspruch 1 definiert sind

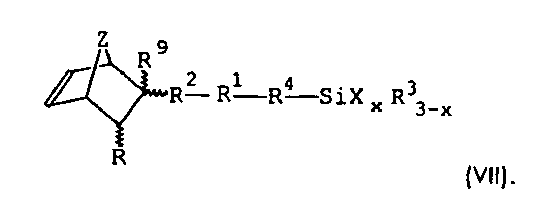

18. Verwendung noch einem der Ansprüche 11 bis 17, **dadurch gekennzeichnet, daß** man als weitere hydrolytisch kondensierbare Verbindungen polyaddierbare und/oder radikalisch und/oder ionisch und/oder kovalent-nucleophil polymerisierbare Verbindungen einsetzt, gegebenenfalls in vorkondensierter Form.

19. Verwendung nach einem der Ansprüche 11 bis 18, **dadurch gekennzeichnet, daß** man als weitere hydrolytisch kondensierbare Verbindungen des Siliciums eine oder mehrere Verbindungen der allgemeinen Formel (VIII) einsetzt, gegebenenfalls in vorkondensierter Form,
Rₐ(Z'R")_{b}SiX_{4-(a+b)} (VIII)
in der die Reste und Indices folgende Bedeutung haben:
| | | |
|---|---|---|
| R | = | Alkyl, Alkenyl, Aryl, Alkylaryl oder Arylalkyl, |
| R" | = | Alkylen oder Alkenylen, wobei diese Reste durch Sauerstoff- oder Schwefelatome oder durch Aminogruppen unterbrochen sein können, |
| X | = | Wasserstoff, Halogen, Hydroxy, Alkoxy, Acyloxy, Alkylcarbonyl, Alkoxycarbonyl oder NR'₂, mit R' = Wasserstoff, Alkyl oder Aryl, |
| Z' | = | Halogen oder eine gegebenenfalls substituierte Amino-, Amid-, Aldehyd-, Alkylcarbonyl-, Carboxy-, Mercapto-, Cyano-, Alkoxy-, Alkoxycarbonyl-, Sulfonsäure-, Phosphorsäure-, Acryloxy-, Methacryloxy-, Epoxy- oder Vinylgruppe, |
| a | = | 0, 1, 2, oder 3, |
| b | = | 0, 1, 2, oder 3, mit a+b = 1,2 oder 3. |

20. Verwendung nach einem oder mehreren der Ansprüche 11 bis 19. **dadurch gekennzeichnet, daß** man als weitere hydrolytisch kondensierbare Verbindungen des Siliciums eine oder mehrere Verbindungen der allgemeinen Formel (IX) einsetzt, gegebenenfalls in vorkondensierter Form,
{XₙRₖSi[(R²A)₁]₄₋₍ₙ₊ₖ₎}ₓB (IX)
in der die Reste und Indices folgende Bedeutung haben:
| | | |
|---|---|---|
| A | = | O. S. PR', POR', NHC(O)O oder NHC(O)NR', mit R' = Wasserstoff, Alkyl oder Aryl, |
| B | = | geradkettiger oder verzweigter organischer Rest, der sich von einer Verbindung B' mit mindestens einer (für I = 1 und A = NHC(O)O oder NHC(O)NR') bzw. mindestens zwei C=C-Doppelbindungen und 5 bis 50 Kohlenstoffatomen ableitet, mit R'= Wasserstoff, Alkyl oder Aryl, |
| R | = | Alkyl, Alkenyl, Aryl, Alkylaryl oder Arylalkyl. |
| R² | = | Alkylen, Arylen oder Alkylenarylen, |
| X | = | Wasserstoff, Halogen, Hydroxy, Alkoxy, Acyloxy. Alkylcarbonyl. Alkoxycarbonyl oder NR'₂, mit R' = Wasserstoff, Alkyl oder Aryl, |
| n | = | 1, 2 oder 3, |
| k | = | 0, 1 oder 2, |
| l | = | 0 oder 1, |
| x | = | eine ganze Zahl, deren Maximalwert der Anzahl von Doppelbindungen in der Verbindung B' minus 1 entspricht, bzw. gleich der Anzahl von Doppelbindungen in der Verbindung B' ist, wenn I = 1 und A für NHC(O)O oder NHC(O)NR' steht. |

21. Verwendung nach Anspruch 20, **dadurch gekennzeichnet, daß** man eine Verbindung der allgemeinen Formel (IX) einsetzt, in der sich der Rest B von einer substituierten oder unsubstituierten Verbindung B' mit zwei oder mehreren Acrylat- und/oder Methacrylatgruppen ableitet.

22. Verwendung nach einem oder mehreren der Ansprüche 11 bis 20, **dadurch gekennzeichnet, daß** man als weitere hydrolytisch kondensierbare Komponente eine oder mehrere, im Reaktionsmedium lösliche Aluminium, Titan- oder Zirkoniumverbindungen, gegebenenfalls in vorkondensierter Form, der Formel
AlR°₃ bzw. M X_{y} R_{z}
einsetzt, in der M Titan oder Zirkonium bedeutet, die Reste R, R° und X gleich oder verschieden sind, R° Halogen, Hydroxy, Alkoxy oder Acyloxy darstellt, y eine ganze Zahl von 1 bis 4 ist, insbesondere 2 bis 4, z für 0, 1, 2 oder 3 steht, vorzugsweise für 0, 1 oder 2, und X und R wie im Falle der allgemeinen Formel (I) definiert sind.

23. Verwendung nach einem oder mehreren der Ansprüche 11 bis 22, **dadurch gekennzeichnet, daß** man dem Polykondensat gegebenenfalls eine oder mehrere radikalisch und/oder ionisch und/oder kovalent-nucleophil polymerisierbare Komponenten und/oder polyaddierbare Komponenten zusetzt, und daß man das Polykondensat durch Polymerisation oder Polyaddition härtet.

24. Verwendung von hydrolysierbaren und polyaddierbaren bzw. polymerisierbaren Silanen zur Herstellung von makromolekularen Massen durch ringöffnende Polymerisation einer oder mehrerer C=C-Doppelbindungen aufweisender, cyclischer Verbindungen und/oder durch Polyaddition von Thiolen an eine oder mehrere C=C-Doppelbindungen aufweisende, cyclische Verbindungen, und gegebenenfalls durch radikalische und/oder ionische und/oder kovalent-nucleophile Polymerisation weiterer radikalisch und/oder ionisch und/oder kovalent-nucleophil polymerisierbarer Verbindungen, und/oder von den oben genannten Verbindungen abgeleiteten Oligomeren, gegebenenfalls durch Einwirken von Wärme und/oder elektromagnetischer Strahlung und/oder redox-induziert, und gegebenenfalls in Anwesenheit eines oder mehrerer Initiatoren und/oder eines Lösungsmittels, **dadurch gekennzeichnet, daß** 5 bis 100 Molprozent der cyclischen, C=C-Doppelbindungen aufweisenden Verbindungen, auf der Basis monomerer Verbindungen, aus Silanen der Formel 1 wie in den Ansprüchen 1 bis 7 definiert ausgewählt werden, 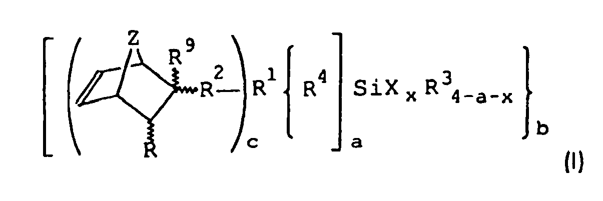 in der die Reste und Indices wie in Anspruch 1 angegeben definiert sind.

25. Verwendung nach Anspruch 24, **dadurch gekennzeichnet, daß** man als kationisch polymerisierbare Verbindungen einen oder mehrere Spiroorthoester, Spiroorthocarbonate, bicyclische Spiroorthoester. Methacryloyl-Spiroorthoester, Mono- oder Oligoepoxide einsetzt.

26. Verwendung nach Anspruch 24 oder 25, **dadurch gekennzeichnet, daß** man als radikalisch polymerisierbare Verbindungen eine oder mehrere Verbindungen der allgemeinen Formel IX einsetzt,
{XₙRₖSi[(R²A)ₗ]₄₋₍ₙ₊ₖ₎}ₓB (IX)
in der die Reste und Indices wie in Anspruch 20 definiert sind.

27. Verwendung nach einem oder mehreren der Ansprüche 24 bis 26, **dadurch gekennzeichnet, daß** man das Polymerisat bzw. das Produkt der Polyaddition, gegebenenfalls in Anwesenheit weiterer, hydrolytisch kondensierbarer Verbindungen des Siliciums und gegebenenfalls anderer Elemente aus der Gruppe B, Al, P, Sn, Pb, der Übergangsmetalle, der Lanthaniden und der Actiniden, und/oder von den oben genannten Verbindungen abgeleiteten Vorkondensaten, durch Einwir-ken von Wasser oder Feuchtigkeit, gegebenenfalls in Anwesenheit eines Katalysators und/oder eines Lösungsmittels, hydrolytisch kondensiert.

28. Verwendung noch Anspruch 27, **dadurch gekennzeichnet, daß** man als weitere kondensierbare Verbindungen des Siliciums eine oder mehrere Verbindungen der allgemeinen Formel (VIII), gegebenenfalls in vorkondensierter Form, einsetzt,
Rₐ(Z'R")_{b}SiX_{4-(a+b)} (VIII)
in der die Reste und indices wie in Anspruch 19 definiert sind.

29. Verwendung von hydrolysierbaren und polyaddierbaren bzw. polymerisierbaren Silanen zur Herstellung von Bulkmaterialien, Kompositen, Klebstoffen, Verguß- und Dichtungsmassen, Beschichtungsmaterialien, Schleifmitteln, Beschichtungen, Haftvermittlern, Füllstoffen, Fasern, Folien. Contact(Linsen) und Bindemitteln für Partikel, **dadurch gekennzeichnet, daß** die Silane unter solchen der Formeln 1 bis VII wie in den Ansprüchen 1 bis 7 definiert ausgewählt werden.

## Claims

1. Hydrolysable and polyaddable or polymerisable silanes of the general formula I 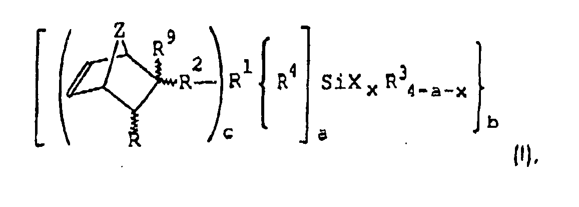 in which the radicals and indices are the same or different and have the following meaning:
| | | |
|---|---|---|
| R | = | hydrogen, R²-R¹-R⁴-SiXₓR³₃₋ₓ, alkyl, alkenyl, aryl, alkylaryl or arylalkyl having in each case 1 to 15 carbon atoms, wherein these radicals may contain oxygen or sulphur atoms, carbonyl, amide or amino groups; |
| R¹ | = | alkylene, arylene, arylenealkylene having in each case 0 to 15 carbon atoms, wherein these radicals may contain oxygen or sulphur atoms, ester, carbonyl, amide or amino groups; |
| R² | = | alkylene, arylene, arylenealkylene having in each case 0 to 15 carbon atoms, wherein these radicals may contain oxygen or sulphur atoms, ester, carbonyl, amide or amino groups; |
| R³ | = | alkyl, alkenyl, aryl, alkylaryl or arylalkyl having in each case 1 to 15 carbon atoms, wherein these radicals may contain oxygen or sulphur atoms, ester, carbonyl, amide or amino groups; |
| R⁴ | = | -CHR⁶-CHR⁶-S-R⁵-, -CO-S-R⁵-, -CHR⁶-CHR⁶-NR⁶-R⁵-, -Y-CS-NH-R⁵-, -S-R⁵, -Y-CO-NH-R⁵- -CO-NR⁶-R⁵-; |
| R⁵ | = | alkylene, arylene, arylenealkylene having in each case 1 to 15 carbon atoms, wherein these radicals may contain oxygen or sulphur atoms, ester, carbonyl, amide or amino groups; |
| R⁶ | = | hydrogen, alkyl or aryl having 1 to 10 carbon atoms |
| R⁹ | = | hydrogen, alkyl, alkenyl, aryl, alkylaryl or arylalkyl having in each case 1 to 15 carbon atoms, wherein these radicals may contain oxygen or sulphur atoms, ester, carbonyl, amide or amino groups; |
| X | = | hydrogen, halogen, hydroxy, alkoxy, acyloxy, alkylcarbonyl, alkoxycarbonyl or NR"₂, where R" = hydrogen, alkyl or aryl; |
| Y | = | -O- or -NR⁶-; |
| Z | = | -O- or -(CHR⁶)ₘ-, where m = 1 or 2; |
| a | = | 1, 2 or 3, where b = 1 for a=2 or 3; |
| b | = | 1,2 or 3, where a = 1 for b = 2 or 3; |
| c | = | 1 to 6; |
| x | = | 1,2 or 3; |
| a+x | = | 2, 3 or 4, |
with the proviso that compounds of the formula 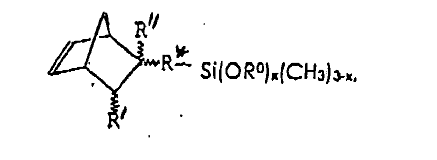 wherein
R' = hydrogen, methyl or ethyl,
R" = hydrogen, methyl or ethyl,
R* = a organic radical having 1 to 6 carbon atoms,
R⁰ = alkyl or acyl having 1 to 6 carbon atoms, are the exceptions.

2. Hydrolysable and polyaddable or polymerisable silanes according to claim 1, **characterised in that** the index a in the general formula I is equal to 1 (silanes of the general formula II) and the radicals and indices are defined as in claim 1

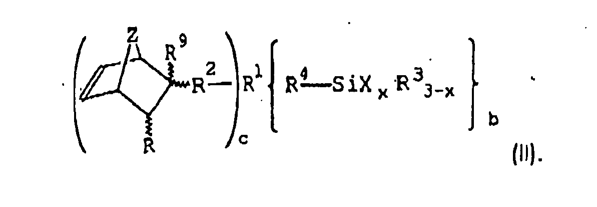

3. Hydrolysable and polyaddable or polymerisable silanes according to claim 1, **characterised in that** the index b in the general formula I is equal to 1 (silanes of the general formula III) and the radicals and indices are defined as in claim 1

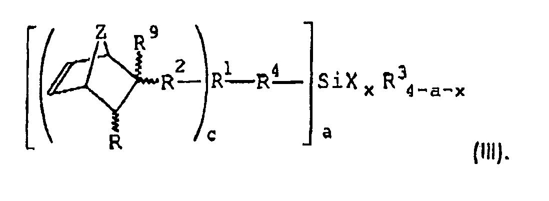

4. Hydrolysable and polyaddable or polymerisable silanes according to claim 1, **characterised in that** the indices a and b in the general formula I are equal to 1 (silanes of the general formula IV) and the radicals and indices are defined as in claim 1

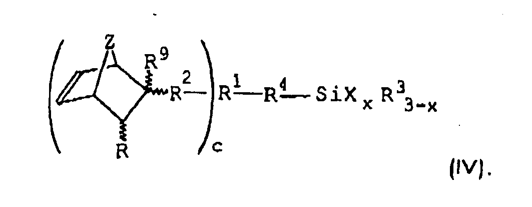

5. Hydrolysable and polyaddable or polymerisable silanes according to claim 1, **characterised in that** the indices a and c in the general formula I are equal to 1 (silanes of the general formula V) and the radicals and indices are defined as in claim 1

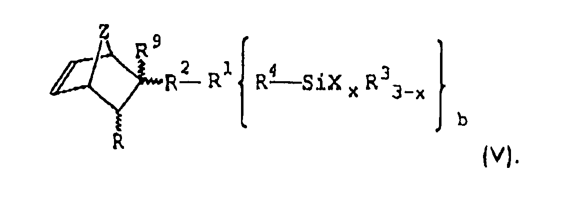

6. Hydrolysable and polyaddable or polymerisable silanes according to claim 1, **characterised in that** the indices b and c in the general formula I are equal to 1 (silanes of the general formula VI) and the radicals and indices are defined as in claim 1

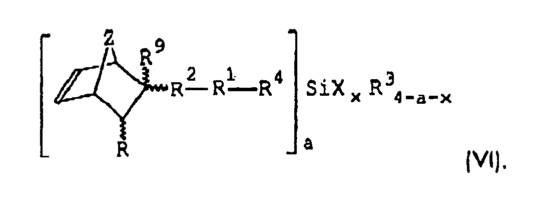

7. Hydrolysable and polyaddable or polymerisable silanes according to claim 1, **characterised in that** the indices a, b and c in the general formula I are equal to 1 (silanes of the general formula VII) and the radicals and indices are defined as in claim 1

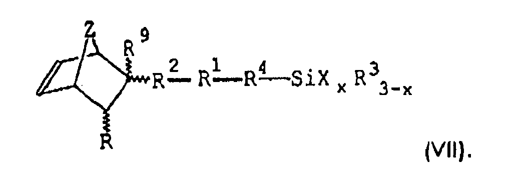

8. Process for producing silanes according to one of claims 1 to 7, **characterised**
**in that** 1 to b moles of a silane of the formula (HY-R⁵-)ₐSiXR³₄₋ₐ₋ₓ or HₐSiXR³₄₋ₐ₋ₓ are reacted with a moles of a compound of the formula XI or XII, wherein R⁷ represents OH, OR , Cl or H, and the remaining radicals and indices are defined as in claim 1

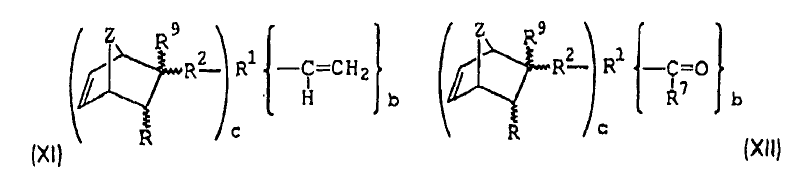

9. Process for producing silanes according to one of claims 1 to 7, **characterised**
**in that** 1 to b moles of a silane of the formula (R⁸-R⁵-)ₐSiXR³₄₋ₐ₋ₓ are reacted with a moles of a compound of the general formula XIII, wherein R⁸ represents a thioisocyanate, isocyanate, epoxy or a cyclic anhydride group and the remaining radicals and indices are defined as in claim 1

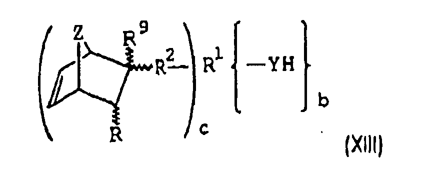

10. Process for producing silanes according to one of claims 1 to 7, **characterised**
**in that** a furan, cyclopentadiene or cyclohexadiene derivative is subjected to a Diels-Alder reaction with a silane of the general formula
[(H₂C=CH-)_{c}R¹]ₐSiXₓR₄₋ₐ₋ₓ, wherein the radicals and indices are defined as in claim 1.

11. Use of hydrolysable and polyaddable or polymerisable silanes for producing organically modified silicic acid polycondensates or organically modified silicic acid heteropolycondensates by hydrolytic condensation of one or more hydrolytically condensable compounds of silicon and optionally further elements from the group B, Al, P, Sn, Pb, the transition metals, the lanthanides and the actinides, and/or precondensates derived from the above-mentioned compounds, optionally in the presence of a catalyst and/or a solvent, by action of water or of moisture, **characterised in that** 5 to 100 mole%, based on monomer compounds, of the hydrolytically condensable compounds are selected from silanes of the general formula (I) as defined in claim 1.

12. Use of hydrolysable and polyaddable or polymerisable silanes according to claim 11, **characterised in that** the index a in the general formula I as defined in claim 1 is equal to 1 (silanes of the general formula II) and the radicals and indices are defined as in claim 1

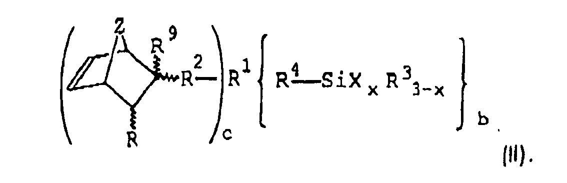

13. Use of hydrolysable and polyaddable or polymerisable silanes according to claim 11, **characterised in that** the index b in the general formula I as defined in claim 1 is equal to 1 (silanes of the general formula III) and the radicals and indices are defined as in claim 1

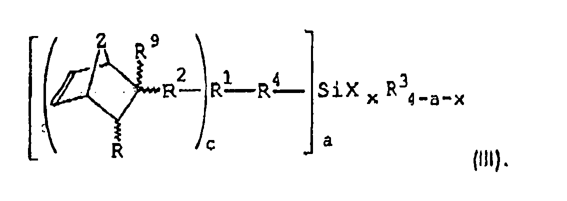

14. Use of hydrolysable and polyaddable or polymerisable silanes according to claim 11, **characterised in that** the indices a and b in the general formula I as defined in claim 1 are equal to 1 (silanes of the general formula IV) and the radicals and indices are defined as in claim 1

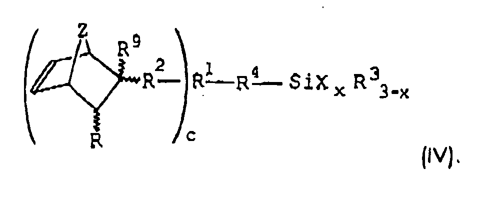

15. Use of hydrolysable and polyaddable or polymerisable silanes according to claim 11, **characterised in that** the indices a and c in the general formula I as defined in claim 1 are equal to 1 (silanes of the general formula V) and the radicals and indices are defined as in claim 1

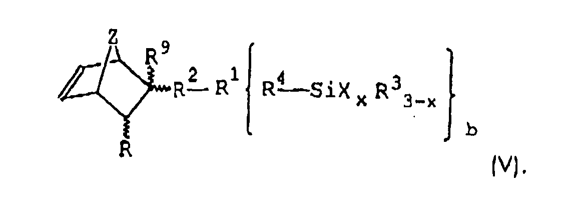

16. Use of hydrolysable and polyaddable or polymerisable silanes according to claim 11, **characterised in that** the indices b and c in the general formula I as defined in claim 1 are equal to 1 (silanes of the general formula VI) and the radicals and indices are defined as in claim 1

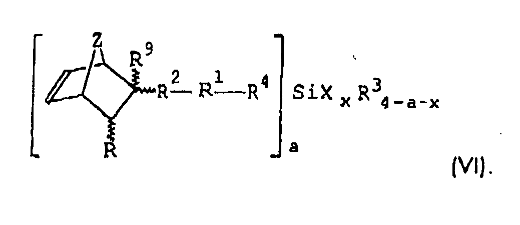

17. Use of hydrolysable and polyaddable or polymerisable silanes according to claim 11, **characterised in that** the indices a, b and c in the general formula I as defined in claim 1 are equal to 1 (silanes of the general formula VII) and the radicals and indices are defined as in claim 1

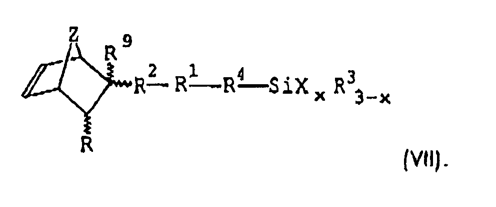

18. Use according to one of claims 11 to 17, **characterised in that** polyaddable compounds and/or compounds which can be polymerised by free-radical and/or by ionic chain and/or by covalent nucleophile are used as further hydrolytically condensable compounds, optionally in precondensed form.

19. Use according to one of claims 11 to 18, **characterised in that** one or more compounds of the general formula (VIII) are used as further hydrolytically condensable compounds of silicon, optionally in precondensed form,
Rₐ(Z'R")_{b}SiX_{4-(a+b)} (VIII)
in which the radicals and indices have the following meaning:
| | | |
|---|---|---|
| R | = | alkyl, alkenyl, aryl, alkylaryl or arylalkyl, |
| R" | | = alkylene or alkenylene, wherein these radicals may be interrupted by oxygen or sulphur atoms or by amino groups, |
| X | = | hydrogen, halogen, hydroxy, alkoxy, acyloxy, alkylcarbonyl, alkoxycarbonyl or NR'₂, where R' = hydrogen, alkyl or aryl, |
| Z' | = | halogen or an optionally substituted amino, amide, aldehyde, alkylcarbonyl, carboxy, mercapto, cyano, alkoxy, alkoxycarbonyl, sulphonic acid, phosphoric acid, acryloxy, methacryloxy, epoxy or vinyl group, |
| a | = | 0, 1, 2, or 3, |
| b | = | 0, 1, 2, or 3, where a+b = 1, 2 or 3. |

20. Use according to one or more of claims 11 to 19, **characterised in that** one or more compounds of the general formula (IX) are used as further hydrolytically condensable compounds of silicon, optionally in precondensed form,
{XₙRₖ Si[(R²A)ₗ]₄₋₍ₙ₊ₖ₎}ₓB (IX)
in which the radicals and indices have the following meaning:
| | | |
|---|---|---|
| A | = | O, S, PR', POR', NHC(O)O or NHC(O)NR', where R' = hydrogen, alkyl or aryl, |
| B | = | straight-chain or branched organic radical, which is derived from a compound B' having at least one (for 1= 1 and A = NHC(O)O or NHC(O)NR') or at least two C=C double bonds and 5 to 50 carbon atoms, where R' = hydrogen, alkyl or aryl, |
| R | = | alkyl, alkenyl, aryl, alkylaryl or arylalkyl, |
| R² | = | alkylene, arylene or alkylenearylene, |
| X | = | hydrogen, halogen, hydroxy, alkoxy, acyloxy, alkylcarbonyl, alkoxycarbonyl or NR'₂, where R' = hydrogen, alkyl or aryl, |
| n | = | 1,2 or 3, |
| k | = | 0, 1 or 2, |
| l | = | 0 or 1, |
| x | = | a whole number, the maximum value of which corresponds to the number of double bonds in the compound B' minus 1, or is equal to the number of double bonds in the compound B', when 1 = 1 and A represents NHC(O)O or NHC(O)NR'. |

21. Use according to claim 20, **characterised in that** a compound of the general formula (IX) is used, in which the radical B is derived from a substituted or unsubstituted compound B' having two or more acrylate and/or methacrylate groups.

22. Use according to one or more of claims 11 to 20, **characterised in that** one or more aluminium, titanium or zirconium compounds which are soluble in the reaction medium are used as a further hydrolytically condensable component, optionally in precondensed form, of formula
AlR^{o}₃ or M X_{y} R_{z}
in which M denotes titanium or zirconium, the radicals R, R^{o} and X are the same or different, R^{o} represents halogen, hydroxy, alkoxy or acyloxy, y is a whole number from 1 to 4, in particular 2 to 4, z represents 0, 1, 2 or 3, preferably 0, 1 or 2, and X and R are defined as in the case of general formula (I).

23. Use according to one or more of claims 11 to 22, **characterised in that** optionally one or more components which can be polymerised by free-radical and/or by ionic chain and/or by covalent nucleophile and/or polyaddable components are added to the polycondensate, and **in that** the polycondensate is cured by polymerisation or polyaddition.

24. Use of hydrolysable and polyaddable or polymerisable silanes for producing macromolecular compositions by ring-opening polymerisation of one or more cyclic compounds having C=C double bonds and/or by polyaddition of thiols to cyclic compounds having one or more C=C double bonds, and optionally by free-radical and/or ionic chain and/or covalent nucleophilic polymerisation of further compounds which can be polymerised by free-radical and/or by ionic chain and/or by covalent nucleophile, and/or oligomers derived from the above-mentioned compounds, optionally by action of heat and/or electromagnetic radiation and/or redox-induced, and optionally in the presence of one or more initiators and/or a solvent, **characterised in that** 5 to 100 mole per cent of the cyclic compounds having C=C double bonds, based on monomer compounds, are selected from silanes of the formula I as defined in claims 1 to 7, 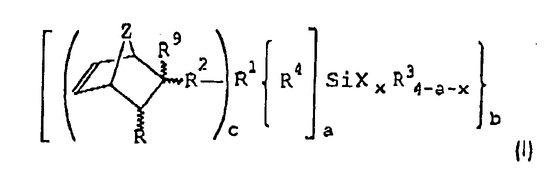 in which the radicals and indices are defined as indicated in claim 1.

25. Use according to claim 24, **characterised in that** one or more spiroorthoesters, spiroorthocarbonates, bicyclic spiroorthoesters, methacryloyl-spiroorthoesters, monoepoxies or oligoepoxies are used as cationically polymerisable compounds.

26. Use according to claim 24 or 25, **characterised in that** one or more compounds of the general formula IX are used as compounds which can be polymerised by free-radical,
{XₙRₖ Si[(R²A)₁]₄₋₍ₙ₊ₖ₎}ₓB (IX)
in which the radicals and indices are defined as in claim 20.

27. Use according to one or more of claims 24 to 26, **characterised in that** the polymerisate or the product of polyaddition, optionally in the presence of further, hydrolytically condensable compounds of silicon and optionally further elements from the group B, Al, P, Sn, Pb, the transition metals, the lanthanides and the actinides, and/or precondensates derived from the above-mentioned compounds, are condensed hydrolytically by action of water or moisture, optionally in the presence of a catalyst and/or a solvent.

28. Use according to claim 27, **characterised in that** one or more compounds of the general formula (VIII), optionally in precondensed form, are used as further condensable compounds of silicon,
Rₐ(Z'R")_{b}SiX_{4-(a+b)} (VIII)
in which the radicals and indices are defined as in claim 19.

29. Use of hydrolysable and polyaddable or polymerisable silanes for producing bulk materials, composites, adhesives, casting and sealing compositions, coating materials, abrasives, coatings, adhesion promoters, fillers, fibres, films, contact (lenses) and binders for particles, **characterised in that** the silanes are selected from those of formulae I to VII as defined in claims 1 to 7.

## Revendications

1. Silanes que l'on peut soumettre à une réaction d'hydrolyse et de polyaddition ou de polymérisation, de formule générale I : 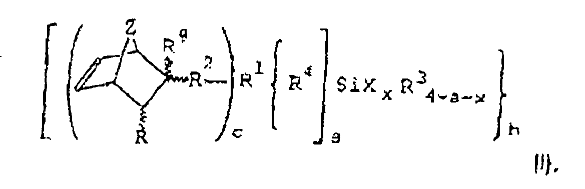 dans laquelle les radicaux et les indices sont identiques ou différents et ont la signification suivante :
R représente l'hydrogène, un groupement R²-R¹-R⁴-SiXₓR³_{3-x'}, alkyle, alcényle, aryle, alkylaryle ou arylalkyle ayant, respectivement, 1 à 15 atomes de carbone, ces radicaux pouvant contenir des atomes d'oxygène ou de soufre, des groupements carbonyle, amide ou amino;
R¹ représente un groupement alkylène, arylène, arylène-alkylène ayant, respectivement, 0 à 15 atomes de carbone, ces radicaux pouvant contenir des atomes d'oxygène ou de soufre, des groupements ester, carbonyle, amide ou amino;
R² représente un groupement alkylène, arylène, arylcne-alkylène ayant, respectivement, 0 à 15 atomes de carbone, ces radicaux pouvant contenir des atomes d'oxygène ou de soufre, des groupements ester, carbonyle, amide ou amino;
R³ représente un groupement alkyle, alcényle, aryle, alkylaryle ou arylalkyle ayant, respectivement, 1 à 15 atomes de carbone, ces radicaux pouvant contenir des atomes d'oxygène ou de soufre, des groupements ester, carbonyle, amide ou amino;
R⁴ représente un radical -CHR⁶-CHR⁶-S-R⁵-, -CO-S-R⁵-, -CHR⁶-CHR⁶-NR⁶-R⁵-, -Y-CS-NH-R⁵-, -S-R⁵, -Y-CO-NH-R⁵-, -CO-NR⁶-R⁵-;
R⁵ représente un groupement alkylène, arylène, arylène-alkylène ayant, respectivement, 1 à 15 atomes de carbone, ces radicaux pouvant contenir des atomes d'oxygène ou de soufre, des groupements ester, carbonyle, amide ou amino;
R⁶ représente l'hydrogène, un groupement alkyle ou aryle ayant 1 à 10 atomes de carbone;
R⁹ représente l'hydrogène, un groupement alkyle, alcényle, aryle, alkylaryle ou arylalkyle ayant, respectivement, 1 à 15 atomes de carbone, ces radicaux pouvant contenir des atomes d'oxygène ou de soufre, des groupements ester, carbonyle, amide ou amino;
X représente L'hydrogène, un halogène, un groupement hydroxy, alcoxy, acyloxy, alkylcarbonyle, alcoxycarbonyle ou NR"₂,
R" représentant l'hydrogène, un groupement alkyle ou aryle;
Y représente -O- ou -NR⁶-;
Z représente -O- ou - (CHR⁶)ₘ-, m ayant pour valeur 1 ou 2;
a vaut 1, 2 ou 3, b valant 1 si a vaut 2 ou 3;
b vaut 1, 2 ou 3, a valant 1 si b vaut 2 ou 3;
c est un nombre de 1 à 6;
x vaut 1, 2 ou 3;
a + x vaut 2, 3 ou 4;
à condition d'exclure les composés de formule : 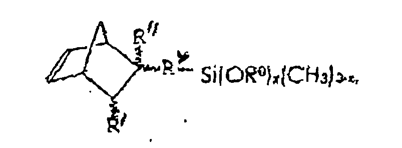 dans laquelle :
R' représente l'hydrogène, un méthyle ou un éthyle,
R" représente l'hydrogène, un méthyle ou un éthyle,
R* représente un radical organique ayant 1 à 6 atomes de carbone,
R° représente un alkyle ou un acyle ayant 1 à 6 atomes de carbone.

2. Silanes que L'on peut soumettre à une réaction d'hydrolyse et de polyaddition ou de polymérisation selon la revendication 1, **caractérisés en ce que** l'indice a, dans la formule générale I, est égal à 1 (silanes de formule générale II) et **en ce que** les radicaux et les indices sont définis de la même manière que dans La revendication 1.

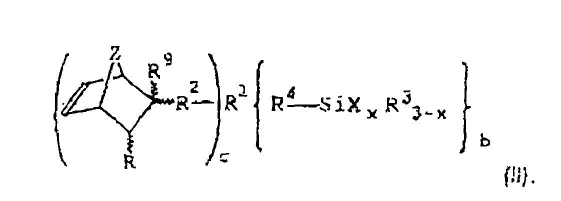

3. Silanes que l'on peut soumettre à une réaction d'hydrolyse et de polyaddition ou de polymérisation selon la revendication 1, **caractérisés en ce que** l'indice b, dans la formule générale I, est égal à 1 (silanes de formule générale III) et **en ce que** les radicaux et les indices sont définis de la même manière que dans la revendication 1.

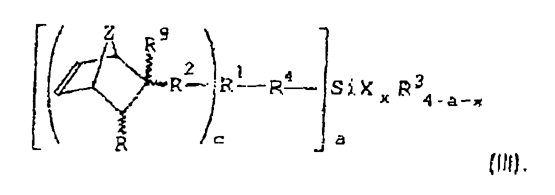

4. Silanes que l'on peut soumettre à une réaction d'hydrolyse et de polyaddition ou de polymérisation selon la revendication 1, **caractérisés en ce que** les indices a et b, dans la formule générale I, sont égaux à 1 (silanes de formule générale IV) et **en ce que** les radicaux et les indices sont définis de la même manière que dans la revendication 1.

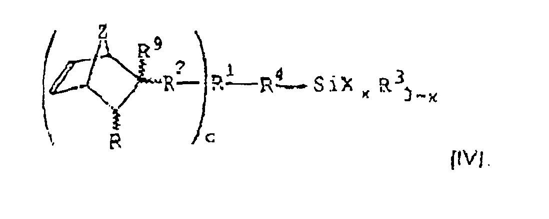

5. Silanes que l'on peut soumettre à une réaction d'hydrolyse et de polyaddition ou de polymérisation selon la revendication 1, **caractérisés en ce que** les indices a et c, dans la formule générale I, sont égaux à 1 (silanes de formule générale V) et **en ce que** les radicaux et les indices sont définis de la même manière que dans la revendication 1.

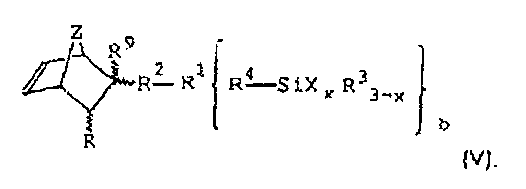

6. Silanes que l'on peut soumettre à une réaction d'hydrolyse et de polyaddition ou de polymérisation selon la revendication 1, **caractérisés en ce que** les indices b et c, dans la formule générale I, sont égaux à 1 (silanes de formule générale VI) et **en ce que** les radicaux et les indices sont définis de la même manière que dans la revendication 1.

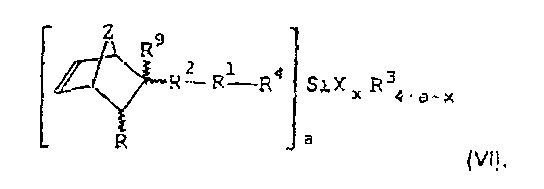

7. Silanes que l'on peut soumettre à une réaction d'hydrolyse et de polyaddition ou de polymérisation selon la revendication 1, **caractérisés en ce que** les indices a, b et c, dans la formule générale I, sont égaux à 1 (silanes de formule générale VII) et **en ce que** les radicaux et les indices sont définis de la même manière que dans la revendication 1.

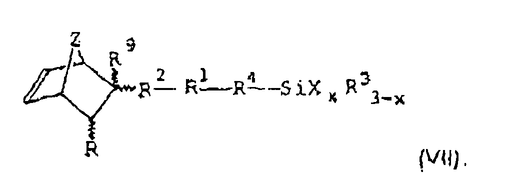

8. Procédé de fabrication de silanes selon l'une quelconque des revendications 1 à 7, **caractérisé en ce que** l'on fait réagir 1 à b mole d'un silane de formule (HY-R⁵)ₐSiXR³_{4·a-x} ou HₐSiXR³₄₋ₐ₋ₓ avec a moles d'un composé de formule XI ou XII, R⁷ représentant OH, OR, Cl ou H et les radicaux et les indices restants étant définis de la même manière que dans la revendication 1.

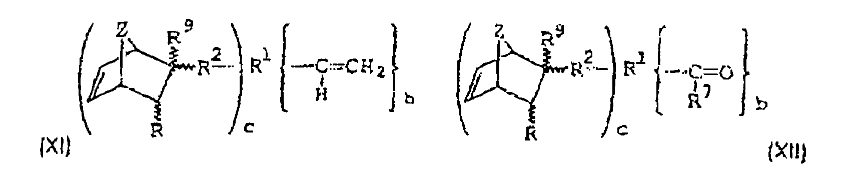

9. Procédé de fabrication de silanes selon l'une quelconque des revendications 1 à 7, **caractérisé en ce que** l'on fait réagir 1 à b mole d'un silane de formule (R⁸-R⁵-)ₐSiXR³₄₋ₐ₋ₓ avec a moles d'un composé de formule générale XIII, R⁸ représentant un groupement thioisocyanate, isocyanate, époxyde ou anhydride cyclique et les radicaux et indices restants étant définis de la même manière que dans la revendication 1.

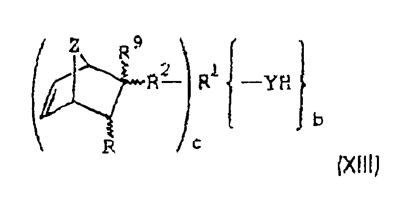

10. Procédé de fabrication de silanes selon l'une quelconque des revendications 1 à 7, **caractérisé en ce que** l'on soumet un dérivé de furane, de cyclopentadiène ou de cyclohexadiène à une réaction de Diels-Alder avec un silane de formule générale [ (H₂C=CH-)_{c}R¹]ₐSiXₓR₄₋ₐ₋ₓ, les radicaux et les indices restants étant définis de la même manière que dans la revendication 1.

11. Utilisation de silanes que l'on peut soumettre à une réaction d'hydrolyse et de polyaddition
ou de polymérisation, pour la fabrication de polycondensats d'acide silicique modifiés organiquement, ou d'hétéropolycondensats d'acide silicique modifiés organiquement, en condensant par hydrolyse un ou plusieurs composés de silicium condensables par hydrolyse et, éventuellement, d'autres éléments du groupe constitué des éléments B, Al, P, Sn, Pb, des métaux de transition, des lanthanides et des actinides, et/ou des précondensats dérivés des composés précités, éventuellement, en présence d'un catalyseur et/ou d'un solvant, par action d'eau ou d'humidité,
**caractérisée en ce que** l'on choisit 5 à 100% en mole, par rapport aux composés monomères, de composés condensables par hydrolyse parmi les silanes de formule générale (I), tels que définis dans la revendication 1.

12. Utilisation de silanes que l'on peut soumettre à une réaction d'hydrolyse et de polyaddition ou de polymérisation selon la revendication 11, **caractérisée en ce que** l'indice a dans la formule générale I est, de la même manière que dans la revendication 1, défini comme égal à 1 (silanes de formule générale II) et les radicaux et les indices sont tels que définis dans la revendication 1.

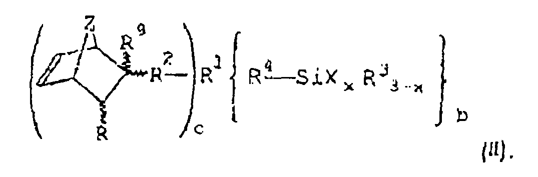

13. Utilisation de silanes que l'on peut soumettre à une réaction d'hydrolyse et de polyaddition ou de polymérisation selon la revendication 11, **caractérisée en ce que** l'indice b dans la formule générale I est, de la même manière que dans la revendication 1, défini comme égal à 1 (silanes de formule générale III) et les radicaux et les indices sont tels que définis dans la revendication 1.

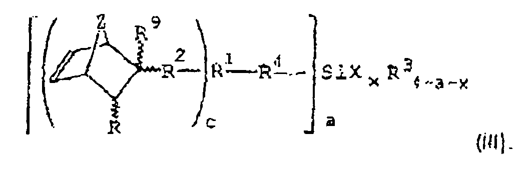

14. Utilisation de silanes que l'on peut soumettre à une réaction d'hydrolyse et de polyaddition ou de polymérisation selon la revendication 11, **caractérisée en ce que** les indices a et b dans la formule générale I sont, de la même manière que dans la revendication 1, définis comme égaux à 1 (silanes de formule générale IV) et les radicaux et les indices sont tels que définis dans la revendication 1.

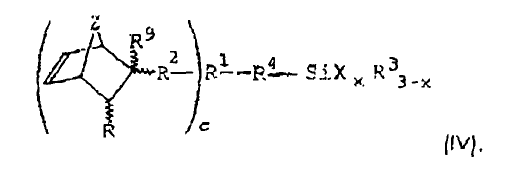

15. Utilisation de silanes que l'on peut soumettre à une réaction d'hydrolyse et de polyaddition ou de polymérisation selon la revendication 11, **caractérisée en ce que** les indices a et c dans la formule générale I sont, de la même manière que dans la revendication 1, définis comme égaux à 1 (silanes de formule générale V) et les radicaux et les indices sont tels que définis dans la revendication 1.

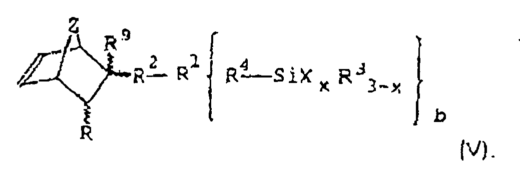

16. Utilisation de silanes que l'on peut soumettre à une réaction d'hydrolyse et de poLyaddition ou de polymérisation selon la revendication 11, **caractérisée en ce que** les indices b et c dans la formule générale I sont, de la même manière que dans la revendication 1, définis comme égaux à 1 (silanes de formule générale VI) et les radicaux et les indices sont tels que définis dans la revendication 1.

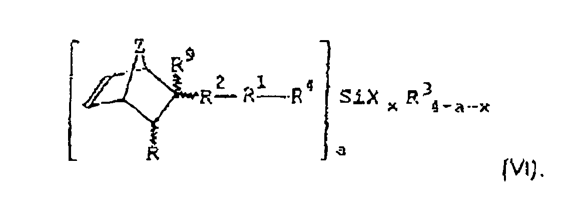

17. Utilisation de silanes que l'on peut soumettre à une réaction d'hydrolyse et de polyaddition ou de polymérisation selon la revendication 1, **caractérisée en ce que** les indices a, b eL c dans la formule générale I sont, de la même manière que dans la revendication 1, définis comme égaux à 1 (silanes de formule générale VII) et les radicaux et indices sont tels que définis dans la revendication 1.

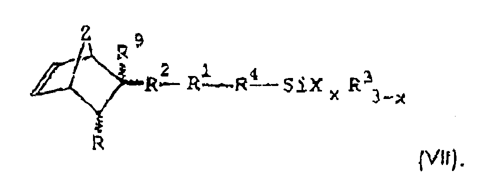

18. Utilisation selon l'une quelconque des revendications 11 à 17, **caractérisée en ce que** l'on utilise comme autres composés condensables par hydrolyse, des composés que l'on peut soumettre à une réaction de polyaddition et/ou de polymérisation par voie radicalaire et/ou ionique et/ou covalente-nucléophile, éventuellement, sous une forme précondensée.

19. Utilisation selon l'une quelconque des revendications 11 à 18, **caractérisée en ce que** l'on utilise, comme autres composés de silicium condensables par hydrolyse, un ou plusieurs composés de formule générale (VIII), éventuellement, sous une forme précondensée :
Rₐ(Z'R")_{b}SiX_{4-(d+b)} (VIII)
dans laquelle les radicaux et les indices ont la signification suivante :
R représente un groupement alkyle, alcényle, aryle, alkylaryle ou arylalkyle,
R" représente un groupement alkylène ou alcénylène, ces radicaux pouvant être interrompus par des atomes d'oxygène ou de soufre ou par des groupements amino,
X représente l'hydrogène, un halogène, un groupement hydroxy, alcoxy, acyloxy, alkylcarbonyle, alcoxycarbonyle ou NR'₂,
R' représentant l'hydrogène, un alkyle ou un aryle;
Z' représente un halogène ou un groupement amino, amide, aldéhyde, alkylcarbonyle, carboxy, mercapto, cyano, alcoxy, alcoxycarbonyle, acide sulfonique, acide phosphorique, acryloxy, méthacryloxy, époxy ou vinyle, éventuellement substitué,
a vaut 0, 1, 2 ou 3,
b vaut 0, 1, 2 ou 3, a + b valant 1, 2 ou 3.

20. Utilisation selon l'une quelconque ou plusieurs des revendications 11 à 19, **caractérisée en ce que** l'on utilise comme autres composés de silicium condensables par hydrolyse, un ou plusieurs composés de formule générale (IX), éventuellement sous une forme précondensée :
{XₙRₖSi[(R²A)₁]_{4·(n+k)}}ₓB (IX)
dans laquelle les radicaux et les indices ont la signification suivante :
A représente O, S, un groupement PR', POR', NHC(O)O ou NHC(O)NR', R' représentant l'hydrogène, un alkyle ou un aryle,
B représente un radical organique linéaire ou ramifié, qui dérive d'un composé B' ayant au moins une double liaison C=C (avec 1 valant 1 et Λ représentant un groupement NHC(O)O ou NHC(O)NR') ou au moins deux doubles liaisons C=C et 5 à 50 atomes de carbone,
R' représentant l'hydrogène, un alkyle ou un aryle,
R représente un groupement alkyle, alcényle, aryle, alkylaryle ou arylalkyle,
R² représente un groupement alkylène, arylène ou alkylène-arylène,
X représente l'hydrogène, un halogène, un groupement hydroxy, alcoxy, acyloxy, alkylcarbonyle, alcoxycarbonyle ou NR'₂,
n vaut 1, 2 ou 3,
k vaut 0, 1 ou 2;
1 vaut 0 ou 1,
x représente un nombre entier, dont la valeur maximale correspond au nombre de doubles liaisons dans le composé B' moins 1, ou est identique au nombre de doubles liaisons dans le composé B', lorsque 1 vaut 1 et A représente un groupement NHC(0)0 ou NHC(O)NR'.

21. Utilisation selon la revendication 20, **caractérisée en ce que** l'on utilise un composé de formule générale (IX), dans laquelle le radical B dérive d'un composé B' substitué ou non ayant deux groupements acrylate et/ou méthacrylate ou plus.

22. Utilisation selon l'une quelconque des revendications 11 à 20, **caractérisée en ce que** l'on utilise comme autres composants condensables par hydrolyse un ou plusieurs composés d'aluminium, de titane ou de zirconium solubles dans le milieu réactionnel, éventuellement sous une forme précondensée, de formule :
AlR°₃ ou MX_{y}R₂
dans laquelle M représente du titane ou du zirconium, les radicaux R, R^{o} et X sont identiques ou différents, R° représente un halogène, un groupement hydroxy, alcoxy ou acyloxy, y représente un nombre entier de 1 à 4, en particulier, de 2 à 4, z représente 0, 1, 2 ou 3, de préférence, 0, 1 ou 2, et X et R sont tels que définis dans le cas de la formule générale (I).

23. Utilisation selon l'une quelconque ou plusieurs des revendications 11 à 22, **caractérisée en ce que** l'on ajoute au polycondensat, éventuellement, un ou plusieurs composants polymérisables par voie radicalaire et/ou ionique et/ou covalente-nucléophile et/ou un ou plusieurs composants pouvant faire l'objet d'une polyaddition, et **en ce que** l'on durcit le polycondensat par polymérisation ou par polyaddition.

24. Utilisation de silanes que l'on peut soumettre à une réaction d'hydrolyse et de polyaddition ou de polymérisation, pour fabriquer des masses macromoléculaires par polymérisation par ouverture de cycle d'un ou de plusieurs composés cycliques présentant des doubles liaisons C=C et/ou par polyaddition de thiols sur des composés cycliques présentant une ou plusieurs doubles liaisons C=C et, éventuellement, par polymérisation radicalaire et/ou ionique et/ou covalente-nucléophile d'autres composés polymérisables par voie radicalaire et/ou ionique et/ou covalente-nucléophile, et/ou d'oligomères dérivés des composés précités, éventuellement, par action de chaleur et/ou d'un rayonnement électromagnétique et/ou par induction redox et, éventuellement, en présence d'un ou de plusieurs initiateurs et/ou d'un solvant, **caractérisée en ce que** l'on choisit 5 à 100% en mole, par rapport aux composés monomères, de composés cycliques présentant des doubles liaisons C=C parmi les silanes de formule I tels que définis dans les revendications 1 à 7 : 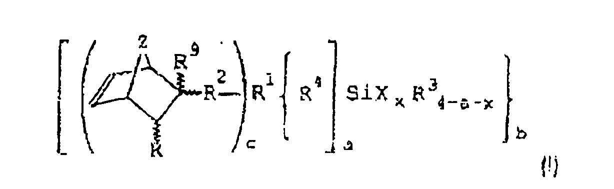 dans laquelle les radicaux et les indices sont définis comme indiqué dans la revendication 1.

25. Utilisation selon la revendication 24, **caractérisée en ce que** l'on utilise comme composés polymérisables par voie cationique, un ou plusieurs spiroorthoesters, spiroorthocarbonates, spiroorthoesters bicyliques, spiroorthoesters de méthacryloyle, mono- ou oligoépoxydes.

26. Utilisation selon la revendication 24 ou 25, **caractérisée en ce que** l'on utilise comme composés polymérisables par voie radicalaire, un ou plusieurs composés de formule générale IX :
{XₙRₖSi[(R²A)ₗ]₄₋₍ₙ₊ₖ₎}ₓB (IX)
dans laquelle les radicaux et les indices sont tels que définis dans la revendication 20.

27. Utilisation selon l'une quelconque ou plusieurs des revendications 24 à 26, **caractérisée en ce que** L'on effectue la condensation par hydrolyse du polymère ou du produit de la polyaddition, éventuellement, en présence d'autres composés de silicium condensables par hydrolyse et, éventuellement, d'autres éléments du groupe constitué des éléments B, A1, P, Sn, Pb, des métaux de transition, des lanthanides et des actinides, et/ou de précondensats dérivés des composés précités, par action d'eau ou d'humidité, éventuellement, en présence d'un catalyseur et/ou d'un solvant.

28. Utilisation selon la revendication 27, **caractérisée en ce que** l'on utilise, comme autres composés de silicium condensables, un ou plusieurs composés de formule générale (VIII), éventuellement, sous une forme précondensée :
Rₐ(Z'R")_{b}SiX_{4-(a+b)} (VIII)
dans laquelle les radicaux et les indices sont tels que définis dans la revendication 20.

29. Utilisation de silanes que l'on peut soumettre à une réaction d'hydrolyse et de polyaddition ou de polymérisation, pour la fabrication de produits en vrac, de composites, de colles, de masses de remplissage et d'étanchéité, de matériaux de revêtement, de produits abrasifs, de revêtements, d'agents adhésifs, de charges, de fibres, de feuilles, de lentilles de contact et de liants pour particules, **caractérisée en ce que** les silanes sont choisis parmi ceux des formules I à VII, comme définies dans les revendications 1 à 7.
